(19)

**Europäisches Patentamt**
**European Patent Office**
**Office européen des brevets**

(11) **EP 4 273 279 B1**

(12) **EUROPEAN PATENT SPECIFICATION**

(45) Date of publication and mention
of the grant of the patent:
**12.03.2025 Bulletin 2025/11**

(21) Application number: **22780741.9**

(22) Date of filing: **28.03.2022**

(51) International Patent Classification (IPC):
$C21D\ 8/12^{(2006.01)}$     $H01F\ 1/18^{(2006.01)}$
$C22C\ 38/32^{(2006.01)}$     $C22C\ 38/34^{(2006.01)}$
$C22C\ 38/16^{(2006.01)}$     $C22C\ 38/04^{(2006.01)}$
$C22C\ 38/08^{(2006.01)}$     $C22C\ 38/06^{(2006.01)}$
$C21D\ 9/46^{(2006.01)}$      $C21D\ 1/76^{(2006.01)}$
$C21D\ 6/00^{(2006.01)}$      $H02K\ 15/02^{(2025.01)}$
$C22C\ 38/02^{(2006.01)}$     $C22C\ 38/00^{(2006.01)}$
$C21D\ 1/26^{(2006.01)}$      $C22C\ 38/60^{(2006.01)}$
$H01F\ 41/02^{(2006.01)}$     $H01F\ 1/147^{(2006.01)}$
$C23C\ 22/00^{(2006.01)}$     $H02K\ 1/00^{(2006.01)}$
$H02K\ 1/02^{(2006.01)}$      $B21D\ 28/22^{(2006.01)}$
$C23C\ 22/12^{(2006.01)}$

(52) Cooperative Patent Classification (CPC):
**C21D 9/46; C21D 1/26; C21D 1/76; C21D 6/008;**
**C21D 8/1227; C21D 8/1233; C21D 8/1261;**
**C21D 8/1272; C22C 38/001; C22C 38/002;**
**C22C 38/004; C22C 38/005; C22C 38/008;**
**C22C 38/02; C22C 38/04;**                  (Cont.)

(86) International application number:
**PCT/JP2022/014988**

(87) International publication number:
**WO 2022/210530 (06.10.2022 Gazette 2022/40)**

(54) **NON-ORIENTED ELECTRICAL STEEL SHEET, MOTOR CORE,METHOD FOR MANUFACTURING NON-ORIENTED ELECTRICAL STEEL SHEET, AND METHOD FOR MANUFACTURINGMOTOR CORE**

NICHTORIENTIERTES ELEKTRO-STAHLBLECH, MOTORKERN, HERSTELLUNGSVERFAHREN FÜR NICHTORIENTIERTES ELEKTRO-STAHLBLECH UND HERSTELLUNGSVERFAHREN FÜR MOTORKERN

TÔLE D'ACIER ÉLECTRIQUE NON ORIENTÉE, NOYAU DE MOTEUR, PROCÉDÉ DE FABRICATION D'UNE TÔLE D'ACIER ÉLECTRIQUE NON ORIENTÉE ET PROCÉDÉ DE FABRICATION D'UN NOYAU DE MOTEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **31.03.2021   JP 2021061565**
**31.03.2021   JP 2021061707**
**04.06.2021   JP 2021094802**

(43) Date of publication of application:
**08.11.2023   Bulletin 2023/45**

(73) Proprietor: **NIPPON STEEL CORPORATION**
**Chiyoda-ku**
**Tokyo 100-8071 (JP)**

(72) Inventors:
• **TANAKA, Ichiro**
  **Tokyo 100-8071 (JP)**
• **WAKISAKA, Takeaki**
  **Tokyo 100-8071 (JP)**
• **MURAKAWA, Tesshu**
  **Tokyo 100-8071 (JP)**

**(Cont. next page)**

- **NATORI, Yoshiaki**
  **Tokyo 100-8071 (JP)**
- **FUJIMURA, Hiroshi**
  **Tokyo 100-8071 (JP)**

(74) Representative: **Zimmermann & Partner**
**Patentanwälte mbB**
**Postfach 330 920**
**80069 München (DE)**

(56) References cited:
   **WO-A1-2018/164185      WO-A1-2018/164185**
   **WO-A1-2019/017426      WO-A1-2020/137500**

   **WO-A1-2021/006280      WO-A1-2021/037062**
   **CN-A- 112 143 961      CN-A- 112 143 961**
   **JP-A- 2019 507 243      KR-A- 20200 035 754**

(52) Cooperative Patent Classification (CPC): (Cont.)
**C22C 38/06; C22C 38/08; C22C 38/16;**
**C22C 38/32; C22C 38/34; C22C 38/60;**
**H01F 1/14791; H01F 1/18; H01F 41/0233;**
**H02K 1/02; H02K 15/02;** B21D 28/22;
C21D 2261/00; C23C 22/12

**Description**

[Technical Field]

The present invention relates to a non-oriented electrical steel sheet, a motor core, a method for manufacturing a non-oriented electrical steel sheet, and a method for manufacturing a motor core. Priority is claimed on Japanese Patent Application No. 2021-061565, filed March 31, 2021, Japanese Patent Application No. 2021-061707, filed March 31, 2021, and Japanese Patent Application No. 2021-094802, filed June 4, 2021.

The present invention relates to a non-oriented electrical steel sheet and a motor core, which have suitable mechanical properties for a rotor core of a motor performing high-speed rotation and have suitable magnetic properties for a stator core of a motor with additional heat treatment applied after punching and stacking as an iron core of a motor, and methods for manufacturing the non-oriented electrical steel sheet and the motor core.

[Background Art]

Due to recent increasing global environmental problems, technology for energy saving and environmental measures have been progressing in many fields. The automobile field is no exception, with rapid progress in technology for reducing exhaust gases and improving fuel efficiency. It is no exaggeration to say that electric vehicles and hybrid vehicles are the culmination of such technology, and the performance of vehicle traction motors (hereinafter also simply referred to as "traction motors") greatly affects the vehicle performance thereof.

Most traction motors use permanent magnets, and consist of a stator core section with windings and a rotor core section with permanent magnets. Recently, a form in which permanent magnets are embedded inside a rotor core (Interior Permanent Magnet Motor; IPM motor) has become mainstream. In addition, the rotational frequency can be arbitrarily controlled due to advances in power electronics technology, and there is a trend toward higher speeds. Accordingly, iron core materials are increasingly being excited in the high frequency range above commercial frequencies (50 to 60 Hz), and there has been a need to improve magnetic properties not only at commercial frequencies but also at 400 Hz to several kHz. In addition, since rotor cores are constantly subjected to stress fluctuations due to fluctuations in rotational frequency as well as a centrifugal force during high-speed rotation, sufficient mechanical properties are also required for iron core materials of rotor cores. Especially in the case of an IPM motor, since it has a complicated rotor shape, the iron core material for rotor cores needs to have mechanical properties that can withstand a centrifugal force and stress fluctuations in consideration of stress concentration.

In an iron core manufacturing process, additional heat treatment may be performed after a stator core and a rotor core are punched and stacked. In motors, since stator cores are required to have excellent magnetic properties, and rotor cores are required to have the above-described mechanical properties, it is conceivable to improve the magnetic properties by subjecting only stator cores to additional heat treatment after punching and stacking the stator cores and rotor cores.

Patent Documents 1 to 7 disclose non-oriented electrical steel sheets achieving both high strength and excellent magnetic properties.

Patent Document 1 discloses a non-oriented electrical steel sheet containing one kind or two or more kinds selected from Si: 3.5% to 7.0%, Ti: 0.05% to 3.0%, W: 0.05% to 8.0%, Mo: 0.05% to 3.0%, Mn: 0.1% to 11.5%, Ni: 0.1% to 20.0%, Co: 0.5% to 20.0%, and Al: 0.5% to 18.0% within a range not exceeding 20.0%. In Patent Document 1, the strength of the steel sheet is enhanced by increasing the amount of Si and solid-solution strengthening with Ti, W, Mo, Mn, Ni, Co, and Al.

This method utilizes solid-solution strengthening as a steel strengthening mechanism. However, in the case of solid-solution strengthening, a base material is also strengthened at the same time, making it difficult to perform cold rolling. In addition, since this method requires a special process of warm rolling in such a method, there is room for improvement, such as improvement in productivity or yield.

Patent Document 2 proposes a high-tensile-strength non-oriented electrical steel sheet for rotating machines with Si: 2.0% or more and less than 3.5%, P: 0.03 or more and less than 0.2%, Mn + Ni: 0.3% to 10%, and the balance being Fe and unavoidable impurities, in which TS $\geq$ 65 kgf/mm$^2$, W5/1000 $\leq$ 50 W/kg, and B50 $\geq$ 1.65 T.

Patent Document 3 proposes a steel sheet which contains B and a large amount of Ni in addition to 2.0% to 3.5% of Si and 0.1% to 6.0% of Mn and has a crystal grain size of 30 $\mu$m or less.

Furthermore, Patent Documents 4 and 5 propose steel sheets containing Nb, Zr, B, Ti or V in addition to 2.0% to 4.0% of Si.

Patent Documents 6 and 7 propose non-oriented electrical steel sheets in which a deformed structure and a non-recrystallized structure remain.

Although the non-oriented electrical steel sheets disclosed in these patent documents have high strength, these have problems with magnetic properties. Specifically, no consideration is given to the improvement in magnetic properties by subjecting the steel sheet to additional heat treatment. In addition, in the process of controlling the structures to obtain high strength, precipitates and solid solution elements which are not suitable for improving magnetic properties during the additional heat treatment are utilized, and even when additional heat treatment is carried out, the magnetic properties that can be obtained are insufficient, so application to stator cores is sometimes difficult.

Non-oriented electrical steel sheets with improved magnetic properties through additional heat treatment have also been examined in Patent Documents 8 to 10.

Patent Document 8 discloses a non-oriented electrical steel sheet in which the area fraction of a crystal structure A with a grain size of 100 $\mu$m or more in a crystal structure after final annealing is 1% to 30%, the average grain size of a crystal structure B which is a crystal structure other than the crystal structure A is 25 $\mu$m or less, and the ratio of the Vickers hardness HvA of the crystal structure A to the Vickers hardness HvB of the crystal structure B satisfies HvA/HvB $\leq$ 1.000.

Patent Document 9 discloses a non-oriented electrical steel sheet in which a base steel has a sheet thickness of 0.10 mm to 0.35 mm, the average crystal grain size in the base steel is 50 $\mu$m or less, and an insulation coating and the Al concentration in the depth direction from the base steel surface are controlled.

Patent Document 10 discloses a non-oriented electrical steel sheet in which the Mn concentration in the depth direction from the base steel surface is controlled.

Although such non-oriented electrical steel sheets have high strength before additional heat treatment and excellent magnetic properties after additional heat treatment, there is room for improvement in fatigue properties and roundness after punching or additional heat treatment.

[Citation List]

[Patent Document]

[Patent Document 1]
Japanese Unexamined Patent Application, First Publication No. S60-238421
[Patent Document 2]
Japanese Unexamined Patent Application, First Publication No. S62-256917
[Patent Document 3]
Japanese Unexamined Patent Application, First Publication No. H1-162748
[Patent Document 4]
Japanese Unexamined Patent Application, First Publication No. H2-8346
[Patent Document 5]
Japanese Unexamined Patent Application, First Publication No. H6-330255
[Patent Document 6]
Japanese Unexamined Patent Application, First Publication No. 2005-113185
[Patent Document 7]
Japanese Unexamined Patent Application, First Publication No. 2006-70296
[Patent Document 8]
PCT International Publication No. WO2018/164185
[Patent Document 9]
Japanese Unexamined Patent Application, First Publication No. 2018-21242
[Patent Document 10]
PCT International Publication No. WO2018/025941

[Summary of Invention]

[Problems to be Solved by the Invention]

As described above, although non-oriented electrical steel sheets having high strength before additional heat treatment and excellent magnetic properties after additional heat treatment have been examined in the related art, there is room for improvement in fatigue properties and roundness after punching or additional heat treatment.

The present invention has been made in consideration of the above-described problems, and an object of the present invention is to provide a non-oriented electrical steel sheet and a motor core which have high strength before additional heat treatment, excellent magnetic properties after additional heat treatment, excellent fatigue properties and roundness after punching, and excellent roundness as a stator core after additional heat treatment, and a method for manufacturing a non-oriented electrical steel sheet and a method for manufacturing a motor core.

[Means for Solving the Problem]

As described above, although non-oriented electrical steel sheets having high strength before additional heat treatment and excellent magnetic properties after additional heat treatment have been examined, there is room for improvement in fatigue properties and roundness after punching, and moreover there is a concern of deformation of stator core after additional heat treatment, and accordingly there is room for improvement in roundness of a stator core.

In particular, in a case where the roundness of an outer circumferential portion of a rotor core or an inner circumferential portion of a stator core is poor, an air gap between the stator core and the rotor core becomes uneven, which adversely affects important performances such as the output and efficiency of a motor. Although a motor in which a rotor core is placed on an inner side and a stator core is placed on an outer side is used as an example in the above-described explanation, the roundness of an outer circumferential portion of a stator core or an inner circumferential portion of a rotor core may become an issue in a motor in which a stator core is placed inside and a rotor core is placed outside.

As an example, in Patent Document 8, if a crystal structure A with a coarse crystal grain size and a crystal structure B with a small crystal grain size are mixed in a predetermined ratio and the hardness ratio HvA/HvB of each region satisfies predetermined conditions, excellent strength and magnetic properties are obtained in a case without additional heat treatment (in a case of assuming use as a rotor blank) and iron loss is improved and a decrease in magnetic flux density is suppressed when crystal grains grow during additional heat treatment in a case with additional heat treatment (in a case of assuming use as a stator core blank).

In such a mixed structure having a region with a coarse grain size and a region with a smaller crystal grain size, in a case where the region with a coarse grain size is dominant in the steel, the fatigue properties in the direction of 45° from the rolling direction are poor, and in a case where the region with a smaller crystal grain is dominant in the steel, the fatigue properties in the rolling direction are poor. To ensure sufficient static strength and improve actual fatigue properties as a rotor core, it is necessary to improve the fatigue properties in the region with a coarse grain size, that is, the fatigue properties in the direction of 45° from the rolling direction.

In addition, rotor cores are required to have roundness after punching as well as these mechanical properties, but there is room for improvement of the mixed structure.

In addition, in a case where the above-described mixed structure is subjected to additional heat treatment, there is a difference in strain released from each region. Therefore, there is a concern of deformation of a stator core. Deformation of a core may affect the magnetic properties and also the performance of a motor. Accordingly, it is necessary to reduce deformation of a stator core after additional heat treatment to obtain desired magnetic properties and performance of a motor. The deformation of a stator core due to additional heat treatment can be evaluated through observation of the roundness after the additional heat treatment.

Patent Document 9 and 10 also do not disclose the fatigue properties and roundness after punching or roundness of a stator core after additional heat treatment.

**In** addition, the present inventors have conducted extensive studies on methods for reducing deformation of cores after additional heat treatment which is a problem of non-oriented electrical steel sheets with a mixed structure having a region with a coarse grain size and a region with a smaller crystal grain size, and have found the following findings.

The present inventors have first investigated punched edges of non-oriented electrical steel sheets having the mixed structure subjected to a punching processing. As a result, it has become clear that steel sheets with significant deformation of cores after additional heat treatment have significant non-uniformity of sags and burrs formed on the punched edges.

**In** addition, when investigating the relationship between the deformation of a core and an insulation coating applied to the surfaces of non-oriented electrical steel sheets to prevent electrical connection between the steel sheets, it has become clear that deformation of a core after additional heat treatment is more significant in an organic-inorganic composite coating, which is mainly composed of an inorganic substance and in which fine organic resin particles are dispersed to suppress die wear during punching, than in a coating with only an inorganic substance (inorganic coating). The reason for this is not clear, but since gases are generated due to the organic resin during additional heat treatment in the organic-inorganic composite coating, it is inferred that the deformation of the core after additional heat treatment is affected by the gas generated during additional heat treatment between the punched and stacked steel sheets, as well as by the non-uniformity of strain release in the mixed structure.

That is, it is thought that the non-uniformity of sags and burrs on the punched edges leads to non-uniformity of a gap between stacked steel sheets, resulting in non-uniformity of release of gases generated during additional heat treatment, thereby promoting deformation of the core.

Here, it is conceivable to use an insulation coating which contains only inorganic substances but does not contain an organic resin to reduce the deformation a core, but this is not preferable because it leads to wear of a punching die. **In** particular, the object is a non-oriented electrical steel sheet with high strength which is suitable for a rotor core, and the wear of a punching die is highly significant in the case where an insulation coating with only an inorganic substance is adopted.

The present inventors have further studied methods for reducing deformation of cores after additional heat treatment on the premise of an organic-inorganic composite coating. As a result, as presumed above, it has become clear that it is effective to reduce the non-uniformity of sags and burrs formed on the punched edges, and they have found that it is effective to reduce the difference in hardness between the region with a coarse grain size and the region with a smaller crystal grain size in the mixed structure. That is, it is thought that, reducing the difference in hardness between both regions reduced the non-uniformity of sags and burrs formed on the punched edges as well as the non-uniformity of strain release during additional heat treatment, resulting in uniform release of gases.

In addition, it has been found that sags and burrs are also caused by a sheet thickness deviation of non-oriented electrical steel sheets. Accordingly, it is important to reduce the sheet thickness deviation to suppress the deformation of a core after additional heat treatment of non-oriented electrical steel sheets having the mixed structure. On the other hand, it has also been found that steel sheets with no sheet thickness deviation restrict the release of gases, so that a core may swell after the additional heat treatment.

Furthermore, to achieve the mixed structure, it is necessary to set the final annealing temperature to be lower than that of an ordinary non-oriented electrical steel sheet in which the entire steel sheet is covered with a uniform recrystallized structure, and it is not easy to correct the shape, such as the sheet thickness deviation or the like, of the steel sheet. Regarding this point, the present inventors have found that, by controlling the temperature increase rate in a temperature range below the recrystallization temperature such that it is within a suitable range, the difference in strength in the mixed structure can be reduced, and also an appropriate steel sheet shape can be maintained.

A non-oriented electrical steel sheet according to one aspect of the present invention is a non-oriented electrical steel sheet having a chemical composition in mass% of: C: 0.0100% or less, Si: 2.6% to 4.1%, Mn: 0.1% to 3.0%, P: 0.15% or less, S: 0.0013% or less, N: 0.0050% or less, Al: 0.1% to 2.0%, Mg: 0.0002% to 0.0100%, B: 0.0001% to 0.0010%, one or more selected from Sn and Sb: 0% to 0.100%, Cr: 0% to 0.1%, Ni: 0% to 5.0%, Cu: 0% to 5.0%, Ca: 0% to 0.010%, and rare earth elements (REM): 0% to 0.010%, with the balance of Fe and impurities, in which an area fraction of a crystal structure A composed of crystal grains having a grain size of 100 $\mu$m or more is 1% to 30% in a cross section parallel to a rolled plane of the non-oriented electrical steel sheet, an average grain size of a crystal structure B which is a crystal structure other than the crystal structure A is 40 $\mu$m or less, and a Vickers hardness HvA of the crystal structure A and a Vickers hardness HvB of the crystal structure B satisfy Equation 1 below.

$$(HvA^2+HvB^2)/2-(HvA+HvB)^2/4\leq 7.0 \ldots \text{Equation 1}$$

In embodiments, the chemical composition may be one or more selected from the group of one or more selected from Sn and Sb: 0.005% to 0.100%, Cr: 0.01% to 0.1%, Ni: 0.05% to 5.0%, Cu: 0.05% to 5.0%, Ca: 0.0010% to 0.0100%, and rare earth elements (REM): 0.0020% to 0.0100%.

In embodiments, a tensile strength in a rolling direction may be 520 MPa or more.

In embodiments, a sheet thickness deviation per sheet width of about 400 mm may be 1 $\mu$m or more and 20 $\mu$m or less.

A motor core according to one aspect of the present invention, which is obtained by stacking the non-oriented electrical steel sheets according to the present invention.

In embodiments, a crystal structure may have an average grain size of 60 $\mu$m or more and 200 $\mu$m or less.

A method for manufacturing a non-oriented electrical steel sheet according to one aspect of the present invention includes: heating a slab having the chemical composition of the non-oriented electrical steel sheet above at 1000°C to 1200°C and carrying out hot rolling to manufacture a hot-rolled steel sheet; subjecting the hot-rolled steel sheet to hot-band annealing at a maximum reaching temperature of 900°C to 1150°C; subjecting the hot-rolled steel sheet after the hot-band annealing to cold rolling or warm rolling at a rolling reduction of 83% or higher to manufacture an intermediate steel sheet; and subjecting the intermediate steel sheet to final annealing that satisfies Equation 2 below with respect to a temperature increase rate S1 (°C/second) in a temperature increase process from 500°C to 600°C with a maximum reaching temperature of 700°C to 850°C.

$$300\leq S1\leq 1000 \ldots \text{Equation 2}$$

A method for manufacturing a motor core according to one aspect of the present invention includes: heating a slab having the chemical composition of the non-oriented electrical steel sheet above at 1000°C to 1200°C and carrying out hot rolling to manufacture a hot-rolled steel sheet; subjecting the hot-rolled steel sheet to hot-band annealing at a maximum reaching temperature of 900°C to 1150°C; subjecting the hot-rolled steel sheet after the hot-band annealing to cold rolling or warm rolling at a rolling reduction of 83% or higher to manufacture an intermediate steel sheet; subjecting the intermediate steel sheet to final annealing that satisfies Equation 2 below with respect to a temperature increase rate S1 (°C/second) in a temperature increase process from 500°C to 600°C with a maximum reaching temperature of 700°C to 850°C to obtain a non-oriented electrical steel sheet; punching the non-oriented electrical steel sheet into a core shape; and stacking non-oriented electrical steel sheets after punching.

$$300 \leq S1 \leq 1000 \ldots \text{Equation 2}$$

In embodiments, the method for manufacturing a motor core may further include: subjecting the stacked non-oriented electrical steel sheets to additional heat treatment at a temperature of 750°C or more and 900°C or less in an atmosphere containing 70 volume% or more of nitrogen.

[Effects of the Invention]

According to the present invention, there is provided a non-oriented electrical steel sheet and a motor core which have high strength before additional heat treatment, excellent magnetic properties after additional heat treatment, excellent fatigue properties and roundness after punching, and excellent roundness as a stator core after additional heat treatment, and a method for manufacturing a non-oriented electrical steel sheet and a method for manufacturing a motor core.

[Embodiment for Implementing the Invention]

Hereinafter, a non-oriented electrical steel sheet according to one embodiment of the present invention (non-oriented electrical steel sheet according to the present embodiment), a method for manufacturing a non-oriented electrical steel sheet according to the present embodiment, a motor core, and a method for manufacturing a motor core will be described in detail.
In the specification of the present application, a rotor core or a stator core is also referred to as a motor core.

[Non-oriented electrical steel sheet]

The non-oriented electrical steel sheet according to the present embodiment has a chemical composition containing the following elements. Hereinafter, % for elements means "mass%".

C: 0.0100% or less

Carbon (C) has an effect of enhancing strength through precipitation of carbides. However, in the non-oriented electrical steel sheet according to the present embodiment, high strength is mainly achieved through solid-solution strengthening by substitutional elements such as Si and through controlling of the ratio of a crystal structure A to a crystal structure B to be described below. Accordingly, C may not be incorporated for high strength. That is, the lower limit of the amount of C includes 0%. However, since C is usually unavoidably incorporated, the lower limit may be more than 0%.
On the other hand, if the amount of C is too high, the magnetic properties of the non-oriented electrical steel sheet deteriorate due to not only precipitation of carbides but also carbon atoms in a solid solution state. In addition, the workability of the non-oriented electrical steel sheet according to the present embodiment which is high-Si steel decreases. Accordingly, the amount of C is 0.0100% or less. The amount of C is preferably 0.0050% or less and more preferably 0.0030% or less.

Si: 2.6% or more, 4.1% or less

Silicon (Si) has an effect of deoxidizing steel. In addition, Si increases electrical resistance of steel and reduces (improves) iron loss of the non-oriented electrical steel sheet. Si further has a high solid-solution strengthening ability compared to other solid-solution strengthening elements such as Mn, Al, and Ni contained in the non-oriented electrical steel sheet. For this reason, Si is most effective for achieving both high strength and low iron loss in a well-balanced manner. If the amount of Si is less than 2.6%, the above-described effects cannot be obtained. For this reason, the amount of Si is set to 2.6% or more.
On the other hand, if the amount of Si is too high, the productivity, especially the bending workability of a hot-rolled steel sheet deteriorates. In addition, as will be described below, the deterioration of the bending workability can be suppressed by appropriately controlling the grain size of the hot-rolled steel sheet. However, if the amount of Si is greater than 4.1%, the cold workability deteriorates. Accordingly, the amount of Si is 4.1% or less. The amount of Si is preferably 3.8% or less.

Mn: 0.1% to 3.0%

Manganese (Mn) increases electrical resistance of steel and reduces iron loss. If the amount of Mn is less than 0.1%, the above-described effect cannot be obtained.
In addition, if the amount of Mn is less than 0.1%, fine Mn sulfides are produced. Fine Mn sulfides inhibit magnetic domain wall displacement or inhibit grain growth during a production process. In this case, the magnetic flux density decreases. For this reason, the amount of Mn is set to 0.1% or more. The amount of Mn is preferably 0.15% or more and more preferably 0.4% or more.
On the other hand, if the amount of Mn is more than 3.0%, austenite transformation is likely to occur, resulting in a decrease in magnetic flux density. Accordingly, the amount of Mn is 3.0% or less. The amount of Mn is preferably 2.0% or less and more preferably 1.5%, 1.3%, or 1.2% or less.

P: 0.15% or less

Phosphorus (P) increases the strength of steel through solid-solution strengthening. However, if the amount of P is too high, P is segregated and the steel becomes embrittled. Accordingly, the amount of P is 0.15% or less. The amount of P is preferably 0.10% or less and more preferably 0.07% or less.

S: 0.0013% or less

Sulfur (S) is an impurity. S forms sulfides such as MnS. Sulfides hinder magnetic domain wall displacement and also inhibit crystal grain growth, thereby deteriorating the magnetic properties. Accordingly, the amount of S is preferably as low as possible. In particular, if the amount of S is greater than 0.0013%, the magnetic properties significantly deteriorate. Accordingly, the amount of S is 0.0013% or less. The amount of S is preferably less than 0.0013%, more preferably 0.0012% or less, and still more preferably 0.0010% or less.

N: 0.0050% or less

Nitrogen (N) is an impurity. N degrades magnetic properties after additional heat treatment. Accordingly, the amount of N is 0.0050% or less. The amount of N is preferably 0.0040% or less.

Al: 0.1% to 2.0%

Aluminum (Al), like Si, has an effect of deoxidizing steel. Al also increases the electrical resistance of steel and reduces iron loss. The amount of Al is preferably 0.1% or more to obtain these effects.
However, A1 does not contribute to high strength compared to Si. Furthermore, if the amount of Al is too high, the workability decreases. Accordingly, even in a case where Al is incorporated, the amount of Al is 2.0% or less. The amount of Al is preferably 1.5% or less.

Mg: 0.0002% to 0.0100%

Although the details will be described below, the non-oriented electrical steel sheet according to the present embodiment contains a crystal structure A and a crystal structure B. The crystal structure A is a region composed of relatively large crystal grains with a crystal grain size of 100 $\mu$m or more, the crystal structure B has a crystal grain size of less than 100 $\mu$m, and the average grain size of the crystal structure B is 40 $\mu$m or less.
In such a mixed structure of the crystal structure A having a relatively coarse crystal grain size and the crystal structure B having a smaller crystal grain size, a trace amount of Mg is incorporated together with B to obtain an effect of reducing the difference in hardness between the crystal structures A and B. Furthermore, an effect of improving the fatigue strength in the direction of 45° from the rolling direction can also be obtained. If the amount of Mg is less than 0.0002%, the above-described effects cannot be obtained. In addition, in a case where the amount of Mg exceeds 0.0100%, the above-described effects are less likely to be obtained. From the viewpoint of improving the roundness after punching, the lower limit value of the amount of Mg is more preferably 0.0003% and the upper limit value of the amount of Mg is more preferably 0.0070%.

B: 0.0001% to 0.0010%

In the embodiment of the present invention, a trace amount of B is incorporated together with Mg to obtain an effect of reducing the difference in hardness between the crystal structures A and B. Furthermore, an effect of improving

8

the fatigue strength in the direction of 45° from the rolling direction can also be obtained. If the amount of B is greater than 0.0001%, the above-described effects are likely to be obtained, which is preferable. In addition, in a case where the amount of B exceeds 0.0010%, the above-described effects are less likely to be obtained. From the viewpoint of improving the roundness after punching, the lower limit value of the amount of B is more preferably 0.0002% and the upper limit value of the amount of B is more preferably 0.0009%.

Although the details of why the difference in hardness between the crystal structures A and B is reduced by the incorporation of trace amounts of Mg and B are not clarified, it is thought that trace amounts of Mg and B affect recovery and recrystallization behavior in the crystal structures and reduce the difference in hardness between the crystal structure A with a coarse grain size and the crystal structure B with a smaller crystal grain size. Furthermore, improvement in the fatigue strength imply that the interface between the crystal structure A and the crystal structure B is strengthened.

The chemical composition of the non-oriented electrical steel sheet according to the present embodiment is basically composed of the above-described elements with the balance being Fe and impurities. However, one or more optional elements (Sn, Sb, Cr, Ni, Cu, Ca, and/or REM) may be incorporated as necessary instead of a part of Fe within the range shown below. Since these optional elements are not necessarily incorporated, the lower limit thereof is 0%.

Impurities are those which are mixed in from ores and scrap as raw materials or from a manufacturing environment and the like when a non-oriented electrical steel sheet is industrially manufactured, and are acceptable to the extent that they do not adversely affect the non-oriented electrical steel sheet according to the present embodiment.

[Regarding optional elements]

One or more selected from group of Sn and Sb: 0% to 0.100%

Both tin (Sn) and antimony (Sb) are optional elements and may not be incorporated. Sn and Sb improve the texture of a non-oriented electrical steel sheet (for example, increase the number of crystal grains in the orientation that contributes to improvement in magnetic properties) to enhance the magnetic properties. The total amount of one or more selected from the group of Sn and Sb is preferably 0.005% or more to obtain the above-described effects stably and effectively.

However, if the total amount of these elements exceeds 0.100%, the steel embrittles. In this case, the steel sheet breaks or scabs occur during manufacturing. Accordingly, even in a case where these elements are incorporated, the total amount of one or more selected from the group of Sn and Sb is 0.100% or less.

Cr: 0% to 0.10%

Chromium (Cr) is an optional element and may not be incorporated. Cr increases electrical resistance of steel. In particular, if Cr is incorporated together with Si, electrical resistance of steel can be increased compared to a case where Si or Cr is incorporated alone, thereby reducing iron loss. Cr also improves productivity of high-Si steel such as a non-oriented electrical steel sheet according to the present embodiment and improves corrosion resistance. The amount of Cr is preferably 0.01% or more to obtain the above-described effects stably and effectively. The amount of Cr is more preferably 0.02% or more from the viewpoint of improving roundness.

However, if the amount of Cr exceeds 0.10%, the effects thereof are saturated, and the costs increase. Accordingly, even in a case where Cr is incorporated, the amount of Cr is 0.10% or less. The amount of Cr is preferably 0.08% or less. The amount of Cr is more preferably 0.07% or less from the viewpoint of suppressing a reduction in saturation magnetic flux density.

Ni: 0% to 5.0%

Nickel (Ni) increases the strength of the steel through solid-solution strengthening without lowering the saturation magnetic flux density and increases the electrical resistance of the steel, resulting in reduction of iron loss. The amount of Ni is preferably 0.05% or more to obtain the above-described effects stably and effectively. The amount of Ni is more preferably 0.06% or more from the viewpoint of high strength.

However, if the amount of Ni exceeds 5.0%, costs increase. Accordingly, even in a case where Ni is incorporated, the amount of Ni is 5.0% or less. The amount of Ni is preferably 2.0% or less. The amount of Ni is more preferably 1.8% or less from the viewpoint of suppressing die wear due to excessively high strength.

Cu: 0% to 5.0%

Copper (Cu) increases the strength of steel through solid-solution strengthening. Cu further strengthens steel by carrying out aging treatment at a temperature of about 500°C owing to the formation of fine Cu precipitate phases. The amount of Cu is preferably 0.05% or more to obtain the above-described effect stably and effectively.

However, if the amount of Cu exceeds 5.0%, the steel embrittles. Accordingly, even in a case where Cu is incorporated, the amount of Cu is 5.0% or less. The amount of Cu is preferably 2.0% or less. The amount of Cu is more preferably 1.6% or less.

Ca: 0% to 0.010%

Rare earth elements (REM): 0% to 0.010%

Calcium (Ca) and REM combine with S in steel and fix S. Accordingly, the magnetic properties of steel are improved. It is preferable to set the amount of Ca to 0.001% or more or the amount of REM to 0.002% or more to obtain the above-described effect stably and effectively. It is more preferable to set the amount of Ca to 0.002% or more and the amount of REM to 0.003% or more from the viewpoint of improving magnetic properties.

On the other hand, if the Ca and REM contents exceed 0.010% each, the effect is saturated, and costs increase. Accordingly, even in a case where Ca or REM is incorporated, the amount of Ca is 0.010% or less and the amount of REM is 0.010% or less. It is more preferable to set the amount of Ca to 0.009% or less and the amount of REM to 0.009% or less from the viewpoint of costs.

REM in the present embodiment means Sc, Y, and lanthanoid (La with atomic number 57 to Lu with atomic number 71), and the amount of REM means a total amount of these elements.

[Microstructure in cross section parallel to rolled plane of non-oriented electrical steel sheet]

A microstructure consists of a crystal structure A and a crystal structure B in the cross section parallel to a rolled plane of the above-described non-oriented electrical steel sheet. The rolled plane means a sheet plane of a sheet-shaped non-oriented electrical steel sheet.

In the present embodiment, the crystal structure A is a region composed of crystal grains having a crystal grain size of 100 $\mu$m or more. On the other hand, the crystal structure B is a crystal structure other than the crystal structure A, and has a crystal grain size of less than 100 $\mu$m. The average grain size of crystal grains of the crystal structure B is 40 $\mu$m or less.

The crystal structure A is a region that is eroded and disappears through additional heat treatment of slow heating rate. In a case where the area fraction of the crystal structure A is less than 1%, the crystal structure B is likely to be coarsened, and the strength of the non-oriented electrical steel sheet is lowered. In addition, in a case where the area fraction of the crystal structure A exceeds 30%, the magnetic properties lower (deteriorate) when the grains are grown through additional heat treatment. Accordingly, the area fraction of the crystal structure A is 1% to 30%. The preferred lower limit of the area fraction of the crystal structure A is 5%, and the preferred upper limit thereof is 20%.

In a case where the area fraction of the crystal structure A in the cross section parallel to the rolled plane is 1% to 30%, the area fraction of the crystal structure B is 70% to 99%. Accordingly, the mechanical properties of the non-oriented electrical steel sheet according to the present embodiment are mainly determined by the crystal structure B.

In addition, the crystal structure B is a region in which grains grow through additional heat treatment of slow heating rate.

If the average grain size of the crystal structure B is larger than 40 $\mu$m, the magnetic properties before additional heat treatment are improved, but it is difficult to satisfy the strength characteristics (tensile strength and/or fatigue strength) before additional heat treatment.

Accordingly, the average grain size of the crystal structure B in the cross section parallel to the rolling direction is necessarily set to 40 $\mu$m or less. The upper limit of the average grain size of the crystal structure B is preferably 30 $\mu$m and more preferably 25 $\mu$m.

In addition, from the viewpoint of improving the roundness after punching, the average crystal grain size of the crystal structure including the crystal structure A and the crystal structure B is more preferably more than 40 $\mu$m.

In the present embodiment, it is sufficient as long as the cross section parallel to the rolled plane has the above-described structure at a depth of 1/4 of the sheet thickness from the rolled sheet surface. This is because the structure at a depth of 1/4 of the sheet thickness from the rolled sheet surface is a representative structure of the steel sheet and greatly affects the properties of the steel sheet.

[Method for measuring area fraction of crystal structure A and average grain size of crystal structure B]

The area fraction of the crystal structure A and the average grain size of the crystal structure B can be measured through the following method.

A sample having a cross section parallel to the rolled plane at a depth of 1/4 of the sheet thickness from the rolled sheet surface of a non-oriented electrical steel sheet is prepared through polishing and the like. After the polished surface (hereinafter referred to as an observation surface) of the sample is adjusted through electrolytic polishing, it is subjected to crystal structure analysis using an electron backscatter diffraction (EBSD) method.

According to the EBSD analysis, in the observation surface, a boundary where the crystal orientation difference is 15° or more is defined as a crystal grain boundary, each region surrounded by this crystal grain boundary is defined as one crystal grain, and a region (observation region) containing 10,000 or more crystal grains is observed. In the observation region, the diameter (equivalent circle diameter) of a crystal grain when it is regarded as an equivalent circle area is defined as a grain size. That is, the grain size means an equivalent circle diameter.

A region composed of crystal grains having a grain size of 100 $\mu$m or more is defined as a crystal structure A, and the area fraction of the region in the total measured area is obtained. In addition, a region composed of crystal grains having a diameter of less than 100 $\mu$m (that is, a structure other than the crystal structure A) is defined as a crystal structure B, and an average crystal grain size thereof is obtained. These measurements can be relatively simply performed through image analysis.

[Hardness of crystal structure A and crystal structure B]

In the non-oriented electrical steel sheet according to the present embodiment, the hardness of the crystal structure A and the crystal structure B satisfies Equation 1.

$$(HvA^2+HvB^2)/2-(HvA+HvB)^2/4 \leq 7.0 \ \dots \ \text{Equation 1}$$

Here, "HvA" is a Vickers hardness of the crystal structure A at a test force (load) of 50 g, "HvB" is a Vickers hardness of the crystal structure B at a test force (load) of 50 g. The Vickers hardness is measured according to JIS Z 2244 (2009).

More specifically, the Vickers hardness is measured in at least 20 points in the region of the crystal structure A through the above-described method, and an average value thereof is defined as a Vickers hardness HvA of the crystal structure A. Similarly, the Vickers hardness is measured in at least 20 points in the region of the crystal structure B through the above-described method, and an average value thereof is defined as a Vickers hardness HvB of the crystal structure B. For the Vickers hardness of the crystal structure A and the crystal structure B, a sample having a cross section parallel to the rolled plane at a depth of 1/4 of the sheet thickness from the rolled sheet surface of a non-oriented electrical steel sheet is prepared through polishing and the like in the same manner as the sample subjected to crystal structure analysis using an electron backscatter diffraction (EBSD) method, and used for measurement.

[Regarding definition of microstructure]

In the non-oriented electrical steel sheet according to the present embodiment, as described above, the "crystal structure A", the "crystal structure B", and "Relational Equation 1 of the hardness of these crystal structures" in a microstructure in the cross section parallel to the rolled plane are controlled to be within a predetermined range. These features will be described below. In the following explanation, it should be noted that some details remain unclarified and some of the mechanisms are presumptive.

In general, the "crystal structure A" in the present embodiment is not significantly different from a region not eroded by "recrystallized grains", that is, "non-recrystallized structure" when observed with an optical microscope. However, this crystal structure A has been sufficiently recovered through final annealing and is very soft. For this reason, it is different from a general "non-recrystallized structure". In addition, when the crystal structure A is evaluated using an amount of accumulated strain (for example, IQ value) through EBSD, it is close to a recrystallized structure rather than a non-recrystallized structure.

Accordingly, in the present embodiment, the "crystal structure A" is defined separately from a general non-recrystallized structure. Specifically, a region having a diameter (equivalent circle diameter) of 100 $\mu$m or more when the area of a region surrounded by a boundary where the crystal orientation difference is 15° or more is regarded as an equivalent circle area is defined as the crystal structure A through crystal structure analysis using an electron backscatter diffraction (EBSD) method.

The "crystal structure B" in the present embodiment is a region similar to a "recrystallized structure" in which crystals having a large orientation difference from a matrix are generated and grown through nucleation from a deformed structure. However, the crystal structure B in the present embodiment also includes regions that are not eroded by recrystallized grains. Accordingly, the "crystal structure B" in the present embodiment is defined separately from a simple "non-recrystallized structure". Specifically, a region (that is, a structure other than the crystal structure A) having a diameter (equivalent circle diameter) of less than 100 $\mu$m when the area of a region surrounded by a boundary where the crystal orientation difference is 15° or more is regarded as an equivalent circle area is defined as the crystal structure B through crystal structure analysis using an electron backscatter diffraction (EBSD) method.

In the non-oriented electrical steel sheet according to the present embodiment, the difference in hardness between the "crystal structure A" and the "crystal structure B" is a predetermined value or less (that is, satisfies Equation 1).

If $(HvA^2+HvB^2)/2-(HvA+HvB)^2/4>7.0$, the fatigue properties and the roundness after punching deteriorate. Equation 1 is a relationship of hardness between the crystal structure A and the crystal structure B, and the smaller the difference in hardness between the two, the smaller the value of Equation 1. The smaller the difference in hardness between the crystal structure A and the crystal structure B, the less likely the fracture or the like occurs at an interface between the crystal structures when loads (fatigue) are accumulated and the higher the fatigue strength. Particularly in a steel sheet with a mixed structure of a crystal structure A having a relatively coarse crystal grain size and a crystal structure B having a smaller crystal grain size, fatigue strength in the direction of 45° from the rolling direction is enhanced. In addition, if there is a large difference in hardness between the crystal structures, sags and burrs formed on the punched edges during punching are likely to be non-uniform, leading to a decrease in roundness. In a case where the value of Equation 1 is 7.0 or less, sufficient fatigue strength is obtained and the roundness after punching becomes excellent.

On the other hand, the lower limit value of $(HvA^2+HvB^2)/2-(HvA+HvB)^2/4$ is not particularly limited, and although it may be theoretically 0, since it is difficult in practice, the lower limit value may be 0.1 or more.

In addition, the non-oriented electrical steel sheet according to the present embodiment is also characterized by its grain size distribution. As is apparent from the above-described definition, the average grain size of the crystal structure B is as very small as 40 $\mu$m or less, where the crystal structure B is a region except for the crystal structure A which is composed of crystal grains having a grain size of 100 $\mu$m or more and exists in a maximum of 30%. This means that, in the microstructure, there are almost no medium-sized crystal grains of about 50 $\mu$m to 90 $\mu$m. That is, in the non-oriented electrical steel sheet according to the present embodiment, the crystal grain size distribution is so-called mixed grains.

For example, if the grain size distribution is normal, in a crystal structure that has achieved grain growth such that there are grains with a grain size of 100 $\mu$m, in general, there are also relatively many crystal grains with several tens of $\mu$m and the average grain size is about 50 $\mu$m.

In the non-oriented electrical steel sheet according to the present embodiment in which the crystal structure A and the crystal structure B are mixed in a predetermined ratio and the relationship (difference) in hardness satisfies Equation 1, in a case without additional heat treatment (in a case of assuming use as a rotor blank), the strength (tensile strength and fatigue strength) and magnetic properties are excellent and the roundness after punching is excellent. On the other hand, iron loss is improved and decreases in roundness and magnetic flux density are suppressed when crystal grains grow during additional heat treatment in a case with additional heat treatment (in a case of assuming use as a stator blank).

[Regarding Equation A]

In the non-oriented electrical steel sheet described above, magnetic flux density of the non-oriented electrical steel sheet before carrying out additional heat treatment is defined as BA(T). Furthermore, magnetic flux density of the non-oriented electrical steel sheet after carrying out additional heat treatment in which the heating rate is 100°C/hour, maximum reaching temperature is 800°C, and the holding time at 800°C in a nitrogen atmosphere is 2 hours is defined as BB(T). At this time, in the non-oriented electrical steel sheet according to the present embodiment, the magnetic flux densities BA and BB desirably satisfy Equation A below.

$$BB/BA \geq 0.990 \ldots \text{Equation A}$$

BB/BA is preferably 0.994 or higher. Although the upper limit of BB/BA is not particularly limited, it is also a target standard that there is no property deterioration (that is, BB/BA=1.000) due to additional heat treatment. However, orientations preferable for magnetic properties preferentially grow due to additional heat treatment, and as a result, BB/BA may exceed 1.000. However, even in this case, BB/BA rarely exceeds 1.025.

(Regarding additional heat treatment conditions)

The heating rate, maximum reaching temperature, and holding time as described above are examples of additional heat treatment conditions. Values typically considered as conditions for strain relief annealing which has currently and practically been carried out are listed. However, a superior effect of suppressing of decreases in magnetic flux density and in roundness due to additional heat treatment in the non-oriented electrical steel sheet according to the present embodiment is obtained within a range of a maximum reaching temperature of 750°C to 900°C in an atmosphere containing 70 volume% or more of nitrogen than those outside the range, which is preferable.

Here, in a case where the proportion of nitrogen in an atmosphere is lower than 70 volume%, the steel sheet may be oxidized due to residual oxygen, and desired magnetic properties may not be obtained. In addition, in a case where a mixture other than oxygen (for example, argon and helium) is used, costs increase, which is not preferable. The proportion of nitrogen in an atmosphere is more preferably 80 volume% or more, still more preferably 90 volume% to 100 volume%, and particularly preferably 97 volume% to 100 volume%. Atmospheric gases other than nitrogen are not particularly limited, but a reducing gas mixture consisting of hydrogen, carbon dioxide, carbon monoxide, water vapor, and methane can be generally used. A method for burning propane gas or natural gas to obtain these gases is generally adopted.

In addition, in a case where the maximum reaching temperature is 750°C or lower, excellent magnetic properties may not be obtained after additional heat treatment. In addition, strain is released unevenly, which may lead to a decrease in roundness. On the other hand, in a case where the maximum reaching temperature exceeds 900°C, adhesion of an insulation coating may be reduced. In addition, grains excessively grow, and although hysteresis loss decreases, eddy current loss increases, so the total iron loss may rather increase. Furthermore, there is a concern that roundness may be reduced during a cooling process. The maximum reaching temperature is preferably 775°C to 850°C.

The heating rate and holding time are not limited to the above-described values, and the effect can also be confirmed even within a wide range to some extent.

In final annealing, grains are grown through heat treatment at a high temperature for a short period of time. On the contrary, in additional heat treatment, in general, heating rate is lower than that of final annealing, and moreover, grains are grown through heat treatment at a relatively low temperature for a long period of time.

Since general final annealing is carried out at a heating rate of about 10 °C/s (36000 °C/hour), this temperature can be presented as an upper limit of the heating rate for additional heat treatment. However, in consideration of general strain relief annealing of a core, such a high heating rate is difficult to achieve. In addition, in a case where the heating rate is too high, there is a concern that the heating may become non-uniform. Accordingly, the heating rate of additional heat treatment is, for example, preferably 500 °C/hour or lower.

On the other hand, if the heating rate is too low, grain growth behavior specific to the non-oriented electrical steel sheet according to the present embodiment which will be described below is less likely to occur. For this reason, the lower limit of the heating rate of additional heat treatment is 30 °C/hour.

Regarding the maximum reaching temperature and holding time during additional heat treatment, the maximum reaching temperature is 750°C to 850°C and the holding time at 750°C or higher is 0.5 to 100 hours in consideration of the conditions for general strain relief annealing.

In the present embodiment, the reason why it is possible to suppress decreases in magnetic flux density and in roundness when grains are grown through additional heat treatment by controlling the ratio of the crystal structure A to the crystal structure B, the average grain size of the crystal structure B, and the relationship (difference) in hardness between the crystal structure A and the crystal structure B is not entirely clarified, but is presumed to be as follows.

The non-oriented electrical steel sheet according to the present embodiment has a mixed structure of the "crystal structure A" and the "crystal structure B", and the difference in hardness between the "crystal structure A" and the "crystal structure B" is a predetermined value or less (that is, satisfies Equation 1). In other words, the difference in hardness at an interface between the crystal structures is small. As a result, it is thought that strain release during additional heat treatment is likely to proceeds uniformly and the roundness after the additional heat treatment improves. In addition, the improvement in fatigue strength suggests that the strength of the interface is also increased. These changes lead to changes in mobility of the interface during the additional heat treatment, and it is presumed that deterioration in magnetic properties is suppressed through changes in grain growth behavior during the additional heat treatment. In addition, although non-uniformity of sags and burrs formed on the edges during punching becomes apparent in the mixed structure, in the non-oriented electrical steel sheet according to the present embodiment, the difference in hardness at an interface between the crystal structures is small, and the non-uniformity of sags and burrs formed on the edges during punching is reduced. It is thought that the decrease in roundness after the additional heat treatment is also caused by non-uniformity of release of gases from an insulating coating containing an organic component, and it is thought that the non-uniformity release of gases is eliminated by reduction in the non-uniformity of sags and burrs on the edges, thereby improving the roundness. In addition, these changes in the hardness difference at the interface lead to changes in mobility of the interface during the additional heat treatment, and it is presumed that deterioration in magnetic flux density is suppressed through changes in grain growth behavior during the additional heat treatment.

[Tensile strength in rolling direction of non-oriented electrical steel sheet]

The non-oriented electrical steel sheet of the present invention has a tensile strength in the rolling direction of 520 MPa or more. If the tensile strength is less than 520 MPa, sufficient strength cannot be obtained in applications such as rotors. Since the chemical composition for increasing the tensile strength is known, it may be appropriately adjusted. The tensile strength TS (MPa) is obtained by conducting a tensile test at normal temperature in atmospheric air according to JIS Z 2241 (2011). Here, it is known that the tensile strength TS is hardly affected by the size of a tensile test piece unless the test piece has a significantly short parallel portion length compared to a parallel portion width of the test piece. Accordingly, a small tensile test piece may be taken from a rotor core and evaluated. In the non-oriented electrical steel sheet constituting the rotor core, the rolling direction can be determined by a pattern formed on the surface of the steel sheet through cold rolling or warm rolling to be described below.

[Composite insulation coating]

The non-oriented electrical steel sheet according to the present embodiment contains organic and inorganic composite insulation coatings on its surface. A resin (organic component) is incorporated to ensure favorable punchability, while an inorganic component is incorporated in consideration of heat resistance and the like during additional heat treatment and the like.

Here, a composite insulation coating is, for example, an insulation coating which is mainly composed of at least any of inorganic substances such as a metal chromate, a metal phosphate, colloidal silica, Zr compounds, and Ti compounds and in which fine organic resin particles are dispersed. In particular, from the viewpoint of reducing environmental loads during manufacturing, which has been in increasing demand in recent years, insulating coatings in which metal phosphates or Zr or Ti coupling agents, or carbonates or ammonium salts thereof are used as starting materials are preferably used. Organic components are, for example, general acrylic resins, acrylic-styrene-based resins, acrylic-silicone-based resins, silicon-based resins, polyester-based resins, epoxy-based resins, and fluorine-based resins.

[Sheet thickness deviation]

The non-oriented electrical steel sheet according to the present embodiment has a sheet thickness deviation of 1 $\mu$m to 20 $\mu$m per sheet width of about 400 mm. During additional heat treatment, gases are generated from an organic component contained in a composite insulation coating. If the sheet thickness deviation exceeds 20 $\mu$m, non-uniformity of sags or burrs formed on the edges during punching becomes noticeable and release of gases between stacked steel sheets is likely to be non-uniform, thereby promoting deformation of cores. In addition, the thickness of the stacked cores becomes non-uniform, leading to deterioration in productivity of a motor. On the other hand, if the sheet thickness deviation is less than 1 $\mu$m, release of gases is restricted, so the cores may swell after additional heat treatment, that is, the deformation of the cores may be promoted. The sheet thickness deviation is preferably 10 $\mu$m or less per sheet width of about 400 mm and more preferably 9 $\mu$m or less from the viewpoints of suppressing the deformation of the cores after additional heat treatment and improving the non-uniformity of the stacked thickness. Since there is a concern of conduction between stacked steel sheets via sags or burrs after additional heat treatment, the sheet thickness deviation is preferably 8 $\mu$m or less per about 400 mm from the viewpoint of obtaining an effect of suppressing the deformation of the cores and an effect of improving performance of a motor by reducing sags and burrs.

The sheet thickness deviation of a non-oriented electrical steel sheet is obtained from the sheet thickness of the non-oriented electrical steel sheet after final annealing measured using an outside micrometer (JIS B 7502 (2016)). In a case of a steel strip with a width of 412 mm or more, five points are measured at intervals of 100 mm in the width direction at the same position in the longitudinal direction. The sheet thickness deviation is a difference between the maximum value and the minimum value of the sheet thickness at these five points. Since the vicinity of both edges portions in the width direction is an unsteady portion affected by slit processing or the like, the sheet thickness measurement position is set at a distance of 6 mm or longer from both edges in the width direction. In a case of a steel strip with a width of less than 412 mm, four points in total are measured: two points 6 mm from each edge in the width direction at the same position in the longitudinal direction; and two internally dividing points that divide the distance between the two points into three equal parts. The sheet thickness deviation in this case is a difference between the maximum value and the minimum value of the sheet thickness at these four points. In a case of evaluating the sheet thickness deviation of a steel sheet sheared from a steel strip, the sheet thickness is measured at a distance of 6 mm or longer from the sheared position in the longitudinal direction to avoid the influence of the shearing processing. The measurement positions and measurement sites in the width direction are the same as those in the case of a steel strip. In the present embodiment, a lower limit value of the sheet width of about 400 mm may be 350 mm and preferably 360 mm.

To obtain the sheet thickness deviation as described above, it is preferable to achieve it by setting the conditions during slit processing in addition to by controlling the tension or the like during cold rolling, warm rolling, or final annealing.

In addition, the non-oriented electrical steel sheets according to the present embodiment may be punched into a shape suitable for a motor core and stacked to form a motor core. This motor core can be preferably used as a rotor core.

In addition, the non-oriented electrical steel sheets according to the present embodiment may be punched into a shape suitable for a motor core, stacked, and then subjected to the above-described additional heat treatment to form a motor core. This motor core can be preferably used as a stator core.

In addition, in this motor core, a crystal structure may have an average grain size of 60 $\mu$m to 200 $\mu$m. Accordingly, iron loss is reduced, and an effect of improving the efficiency of a motor is obtained. The crystal structure in this motor core may not be mixed grains unlike before the additional heat treatment. For this reason, the crystal structure can be measured from an optical microscope photograph, and for example, a photograph imaged at a magnification of 50 times may be used. As a specific measurement method, when the average grain size of the crystal structure is D and when 5 mm lines respectively parallel to sheet plane at the center of the sheet thickness and at two 1/4-thickness locations are drawn on an optical microscope photograph of a structure of a cross section of the sheet thickness direction and the rolling direction of the steel sheet and a number obtained through dividing 15 mm by the total number of grain boundaries crossing each line is L, D is determined as D=1.12L. Coefficient of 1.12 is set from a coefficient when converting the average intercept length L obtained through a cutting method into a nominal grain size.

[Method for manufacturing non-oriented electrical steel sheet]

A method for manufacturing the above-described non-oriented electrical steel sheet will be described. The manufacturing method described below is an example of a method for manufacturing a non-oriented electrical steel sheet according to the present embodiment. Accordingly, the non-oriented electrical steel sheet according to the present embodiment may be produced through manufacturing methods other than the manufacturing method described below.
The method for manufacturing a non-oriented electrical steel sheet according to the present embodiment includes: a process of hot rolling a slab to manufacture a hot-rolled steel sheet (hot rolling process); a process of annealing (hot-band annealing) the hot-rolled steel sheet (hot-band annealing process); a process of subjecting the hot-rolled steel sheet after the hot-band annealing to cold rolling or warm rolling to manufacture an intermediate steel sheet (cold rolling process or warm rolling process); and a process of subjecting the intermediate steel sheet to final annealing (final annealing process). Hereinafter, each process will be described.

[Hot rolling process]

In the hot rolling process, a slab is hot rolled to manufacture hot-rolled steel sheet.
The slab is manufactured through a well-known method. For example, molten steel is manufactured in a converter furnace, an electric furnace, or the like. The manufactured molten steel is subjected to secondary refining in a degassing facility or the like to obtain molten steel having the above-described chemical composition. A slab is cast through a continuous casting method or an ingot casting method using the molten steel. The cast slab may be bloom-rolled.
The slab has a chemical composition in mass% of C: 0.0100% or less, Si: 2.6% or more and 4.1% or less, Mn: 0.1% or more and 3.0% or less, P: 0.15% or less, S: 0.0013% or less, N: 0.0050% or less, Al: 0.1% or more and 2.0% or less, Mg: 0.0002% or more and 0.0100% or less, B: 0.0001% to 0.0010%, one or more selected from Sn and Sb: 0% to 0.100%, Cr: 0% to 0.1%, Ni: 0% to 5.0%, Cu: 0% to 5.0%, Ca: 0% to 0.010%, and rare earth elements (REM): 0% to 0.010% with the balance of Fe and impurities.
In addition, it is preferable that the slab has a chemical composition containing one or more selected from the group of one or more selected from Sn and Sb: 0.005% to 0.100%, Cr: 0.01% to 0.1%, Ni: 0.05% to 5.0%, Cu: 0.05% to 5.0%, Ca: 0.0010% to 0.0100%, and rare earth elements (REM): 0.0020% to 0.0100%.
The slab prepared through the above-described process is hot rolled. The preferred heating temperature for the slab in the hot rolling process is 1000°C to 1200°C. If the heating temperature for the slab exceeds 1200°C, crystal grains in the slab before hot rolling become coarse. The structure of a steel sheet with a high Si content like the chemical composition of the non-oriented electrical steel sheet according to the present embodiment is a ferrite single phase from the slab stage. In addition, the structure is not transformed in heating history in the hot rolling process. For this reason, if the heating temperature of the slab is too high, the crystal grains are likely to be coarse and the coarse deformed structure (flat structure) is likely to remain after hot rolling. The coarse flat structure is less likely to disappear due to recrystallization in a hot-band annealing process which is the next process after the hot rolling process. If the coarse flat structure remains in the hot-band annealed structure, even if the subsequent processes are preferable, the structure required for the non-oriented electrical steel sheet according to the present embodiment cannot be obtained. Accordingly, the upper limit of the heating temperature for the slab is 1200°C.
On the other hand, if the heating temperature for the slab is too low, the workability of the slab deteriorates, and the productivity of a general hot rolling facility deteriorates. Accordingly, the lower limit of the heating temperature for the slab is 1000°C.
The upper limit of the slab heating temperature is preferably 1180°C and more preferably 1160°C. The lower limit of the slab heating temperature is preferably 1050°C and more preferably 1100°C.
The hot rolling conditions may be well-known conditions.

[Hot-band annealing process]

In the hot-band annealing process, the hot-rolled steel sheet manufactured through the hot rolling process is annealed (hot-band annealing). Since {111} which adversely affects magnetic properties develops from the vicinity of grain boundaries before cold rolling, the structure before cold rolling can be made into a coarse-grained recrystallized structure through hot-band annealing, and the grain boundaries can be reduced, thereby suppressing the development of {111}.

Maximum reaching temperature Tmax: 900°C to 1150°C

The maximum reaching temperature Tmax in the hot-band annealing is set to 900°C to 1150°C. If the maximum reaching temperature Tmax is too low, the structure after hot-band annealing (before cold rolling) becomes fine grained or non-recrystallized, thereby deteriorating magnetic properties of a final product. On the other hand, if the maximum reaching temperature Tmax is too high, the recrystallized grain structure becomes excessively coarse and is likely to crack and break in the subsequent processes, thereby significantly deteriorating yields. The heat treatment time for hot-band annealing is not particularly limited. The heat treatment time is, for example, 20 seconds to 4 minutes. Before or after the hot-band annealing, a well-known pickling process for removing an oxide layer formed on the surface of the steel sheet through pickling may be provided.

[Cold rolling or warm rolling process]

The hot-rolled steel sheet after the hot-band annealing process is subjected to cold rolling or warm rolling. Here, warm rolling means a process of rolling a hot-rolled steel sheet heated to 150°C to 600°C.

The rolling reduction in cold rolling or warm rolling is preferably 83% or higher. Here, the rolling reduction (%) is defined by the following equation.

Rolling reduction (%)=(1 - sheet thickness of intermediate steel sheet after final cold or warm rolling/sheet thickness of hot-rolled steel sheet before starting first cold or warm rolling) $\times$ 100

If the rolling reduction is lower than 83%, the amount of recrystallized nuclei required for the subsequent final annealing process is insufficient. In this case, the dispersion state of the crystal structure A is less likely to properly controlled. If the rolling reduction is 83% or higher, a sufficient amount of recrystallized nuclei can be secured. It is thought that this is because recrystallized nuclei are dispersed and increased by introducing a sufficient amount of strain during cold rolling or warm rolling. An intermediate steel sheet is manufactured through the above-described process.

[Final annealing process]

The intermediate steel sheet manufactured through the cold rolling or warm rolling process is subjected to final annealing. The conditions for the final annealing are as follows.

Maximum reaching temperature (annealing temperature): 700°C to 850°C

If the maximum reaching temperature during final annealing is lower than 700°C, recrystallization does not proceed sufficiently. In this case, the magnetic properties of the non-oriented electrical steel sheet deteriorate. Furthermore, in a case where final annealing is performed through continuous annealing, the effect of correcting the shape of the non-oriented electrical steel sheet cannot be sufficiently obtained. On the other hand, if the maximum reaching temperature during final annealing exceeds 850°C, the area fraction of the crystal structure A becomes less than 1%, and the strength of the non-oriented electrical steel sheet decreases. The maximum reaching temperature during final annealing is more preferably lower than 850°C from the viewpoint of improving the strength, fatigue properties, and roundness before additional heat treatment, and the magnetic properties and roundness after additional heat treatment.

From the viewpoint of obtaining a desired structure through sufficient heating without lowering the productivity, the soaking time at a maximum reaching temperature is preferably 1 to 50 seconds.

The temperature increase rate S1 (°C/second) in a temperature increase process from 500°C to 600°C satisfies Equation 2 below.

$$300 \leq S1 \leq 1000 \ldots \text{Equation 2}$$

The above-described maximum reaching temperature is set to achieve desired mechanical properties (high strength). A crystal structure having desired mechanical properties (high strength) is likely to be obtained by passing through a temperature range in which Fe atoms can move up to the maximum reaching temperature as quickly as possible. If the temperature increase rate is lower than 300 °C/second, desired mechanical properties (high strength) may not be obtained. On the other hand, if the temperature increase rate exceeds 1000 °C/second, it may become difficult to control the maximum reaching temperature. For this reason, the temperature increase rate S1 (°C/second) is defined to satisfy Equation 2.

The temperature range to which the temperature increase rate S1 is applied is 500°C to 600°C. This is because, if the temperature increase rate S1 is high, it may become difficult to control the maximum reaching temperature.

In addition, a temperature increase rate S2 in the temperature increase process from room temperature to 500°C is more preferably set to 100 °C/second to 300 °C/second. This has an effect of improving the roundness after punching and the roundness after additional heat treatment.

In addition, a temperature increase rate S3 in the temperature increase process from 600°C to a maximum reaching temperature is more preferably set to 20 °C/second to 100 °C/second. This has an effect of improving the roundness after punching and the roundness after additional heat treatment.

The non-oriented electrical steel sheet according to the present embodiment is manufactured through the above process. **In** the above-described manufacturing method, after the hot-band annealing process, the sheet thickness of the non-oriented electrical steel sheet is set to a final sheet thickness in one cold rolling or warm rolling process.

[Composite insulation coating forming process]

**In** the above-described manufacturing method, a process of forming an organic-inorganic composite insulation coating containing a resin (organic component) for reducing iron loss in a stacked state on the surface of the non-oriented electrical steel sheet after the final annealing process (composite insulation coating forming process) may be performed. It is sufficient to carry out the composite insulation coating forming process through a well-known method.

A composite insulation coating is, for example, an insulation coating which is mainly composed of at least any of inorganic substances such as a metal chromate, a metal phosphate, colloidal silica, Zr compounds, and Ti compounds and in which fine organic resin particles are dispersed. **In** particular, from the viewpoint of reducing environmental loads during manufacturing, which has been in increasing demand in recent years, insulating coatings in which metal phosphates or Zr or Ti coupling agents, or carbonates or ammonium salts thereof are used as starting materials are preferably used. Organic components are, for example, general acrylic resins, acrylic-styrene-based resins, acrylic-silicone-based resins, silicon-based resins, polyester-based resins, epoxy-based resins, and fluorine-based resins. Insulation coating that exhibits adhesion ability by applying heat and/or pressure may be applied. Insulation coatings having an adhesion ability are, for example, acrylic resins, phenolic resins, epoxy-based resins, and melamine-based resins.

[Method for manufacturing motor core]

A method for manufacturing a motor core will be described. A method for manufacturing a motor core according to the present embodiment includes a process of punching predetermined non-oriented electrical steel sheets into a core shape and stacking them, and then performing predetermined additional heat treatment. Hereinafter, predetermined conditions will be described.

Non-oriented electrical steel sheets used for manufacturing a motor core are non-oriented electrical steel sheets having predetermined tensile strength, crystal structures, sheet thickness deviations, and composite insulation coatings, and the above-described non-oriented electrical steel sheet according to one embodiment of the present invention can be used.

A non-oriented electrical steel sheet used for manufacturing a motor core may be processed to a predetermined sheet width through slit processing before being subjected to a punching process described below. Specifically, a non-oriented electrical steel sheet is uncoiled from a delivered wide non-oriented electrical steel sheet in a coil state, continuously cut by a rotating disk-shaped blade arranged on the downstream side of the apparatus for uncoiling the non-oriented electrical steel sheet, divided into a plurality of coils with a predetermined sheet width, and coiled. At this time, the non-oriented electrical steel sheet is, for example, pressed with a pad to ensure the accuracy of the sheet width and a predetermined sheet thickness deviation to apply tension.

[Punching process]

First, the electrical steel sheet of the present embodiment is punched into a desired core shape, and a desired number of punched members are manufactured according to the number of sheets to be stacked. The shape of the punched portion may be a perfect circle to confirm the roundness of the punched portion after additional heat treatment according to the present embodiment. The method for preparing a punched member through punching an electrical steel sheet is not particularly limited, and any well-known method in the related art may be adopted.

[Stacking process]

A motor core is obtained by stacking the punched members prepared in the punching process. Specifically, a desired number of members punched into a desired shape are combined and stacked so that the punched portions are aligned and overlap each other.

A method for fixing the stacked punched members is not particularly limited, and any well-known method in the related art may be adopted. For example, a well-known adhesive may be applied to the punched members to form an adhesive layer, and fixed via the adhesive layer. In addition, the concave and convex portions formed in each punched member may be mechanically fitted and fixed to each other by applying interlocking.

A motor core is obtained by subjecting the non-oriented electrical steel sheet to the punching process and stacking process described above. Since this motor core has favorable roundness, it can be preferably used as a rotor core.

[Additional heat treatment process]

As additional heat treatment, one for the above-described non-oriented electrical steel sheet according to one embodiment of the present invention can be used. That is, in the motor core according to the present embodiment, additional heat treatment is preferably performed at a maximum reaching temperature of 750°C to 900°C in an atmosphere containing 70 volume% or more of nitrogen after the punched members are stacked. The heating rate may be 30 °C/hour to 500 °C/hour, and the holding time at 750°C or longer may be 0.5 hours to 100 hours. By performing such additional heat treatment, in the motor core, an unnecessary strain is uniformly released, the roundness of the punched portion is improved, iron loss is improved, and the decrease in magnetic flux density is suppressed.

A motor core is obtained by subjecting the non-oriented electrical steel sheet to the punching process, stacking process, and additional heat treatment process described above. Since this motor core has favorable roundness and magnetic properties, it can be preferably used as a stator core.

It is obvious that the elements of the above embodiment can be combined with each other.

[Examples]

(Example 1)

Hereinafter, the aspects of the present invention will be specifically described using examples. These examples are merely examples for confirming the effect of the present invention and do not limit the present invention.

[Manufacturing process]

Each slab having a chemical composition shown in Table 1 was prepared.

[Table 1]

| Steel | C | Si | Mn | Al | P | S | N | Mg | R | Sn | Sb | Cr | Ni | Cu | Ca | REM |
|---|---|---|---|---|---|---|---|---|---|---|---|---|---|---|---|---|
| A | 0.0021 | 3.8 | 0.2 | 0.7 | 0.01 | 0.0003 | 0.0018 | 0.0004 | 0.0002 | - | - | - | - | - | - | - |
| B | 0.0019 | 3.4 | 0.6 | 1.1 | 0.03 | 0.0011 | 0.0011 | 0.0005 | 0.0002 | - | - | - | - | - | - | - |
| C | 0.0019 | 3.5 | 0.6 | 1.1 | 0.03 | 0.0011 | 0.0011 | 0.0008 | 0.0005 | - | - | - | - | - | - | - |
| D | 0.0021 | 3.9 | 0.5 | 0.9 | 0.02 | 0.0007 | 0.0021 | 0.0012 | 0.0003 | - | - | - | - | - | - | - |
| E | 0.0019 | 3.4 | 0.6 | 1.1 | 0.03 | 0.0011 | 0.0011 | 0.0021 | 0.0005 | - | - | - | - | - | - | - |
| F | 0.0013 | 3.5 | 0.2 | 0.7 | 0.01 | 0.0009 | 0.0013 | 0.0033 | 0.0003 | - | - | - | - | - | - | - |
| G | 0.0009 | 3.8 | 1.2 | 0.7 | 0.01 | 0.0005 | 0.0016 | 0.0045 | 0.0003 | - | - | - | - | - | - | - |
| H | 0.0021 | 3.8 | 0.2 | 0.7 | 0.01 | 0.0003 | 0.0018 | 0.0004 | 0.0002 | 0.027 | - | - | - | - | - | - |
| I | 0.0019 | 3.4 | 0.6 | 1.1 | 0.03 | 0.0012 | 0.0011 | 0.0005 | 0.0002 | - | 0.054 | - | - | - | - | - |
| J | 0.0019 | 3.5 | 0.6 | 1.1 | 0.03 | 0.0010 | 0.0011 | 0.0008 | 0.0005 | - | - | 0.08 | - | - | - | - |
| K | 0.0021 | 3.9 | 0.5 | 0.9 | 0.02 | 0.0006 | 0.0021 | 0.0012 | 0.0003 | - | - | - | 0.1 | - | - | - |
| L | 0.0019 | 3.4 | 0.6 | 1.1 | 0.03 | 0.0012 | 0.0011 | 0.0021 | 0.0005 | - | - | - | - | 0.6 | - | - |
| M | 0.0013 | 3.5 | 0.2 | 0.7 | 0.01 | 0.0008 | 0.0013 | 0.0033 | 0.0003 | - | - | - | - | - | 0.002 | - |
| N | 0.0009 | 3.8 | 1.2 | 0.7 | 0.01 | 0.0006 | 0.0016 | 0.0045 | 0.0003 | - | - | - | - | - | - | 0.003 |
| O | 0.0021 | 3.8 | 0.2 | 0.7 | 0.01 | 0.0003 | 0.0018 | 0.0003 | 0.0002 | 0.027 | - | 0.08 | - | - | - | - |
| P | 0.0019 | 3.4 | 0.6 | 1.1 | 0.03 | 0.0011 | 0.0012 | 0.0004 | 0.0002 | 0.027 | 0.054 | - | - | - | - | - |
| Q | 0.0019 | 3.5 | 0.6 | 1.1 | 0.03 | 0.0011 | 0.0012 | 0.0007 | 0.0005 | - | - | 0.08 | - | - | 0.003 | - |
| R | 0.0021 | 3.9 | 0.5 | 0.9 | 0.02 | 0.0007 | 0.0020 | 0.0013 | 0.0003 | - | - | - | 0.1 | - | - | 0.003 |
| S | 0.0019 | 3.4 | 0.6 | 1.1 | 0.03 | 0.0011 | 0.0012 | 0.0021 | 0.0005 | 0.035 | - | - | - | 0.6 | 0.003 | - |
| T | 0.0013 | 3.5 | 0.2 | 0.7 | 0.01 | 0.0009 | 0.0014 | 0.0032 | 0.0003 | 00087 | - | - | 0.5 | - | - | - |
| U | 0.0009 | 3.8 | 1.2 | 0.7 | 0.01 | 0.0005 | 0.0016 | 0.0044 | 0.0003 | - | 0.089 | - | - | - | - | 0.003 |
| V | 0.0150 | 3.8 | 1.2 | 0.7 | 0.01 | 0.0005 | 0.0016 | 0.0045 | 0.0003 | - | - | - | - | - | - | - |
| W | 0.0009 | 2.4 | 0.2 | 0.3 | 0.01 | 0.0008 | 0.0022 | 0.0009 | 0.0008 | - | - | - | - | - | - | - |
| X | 0.0012 | 3.4 | 3.1 | 0.7 | 0.01 | 0.0009 | 0.0014 | 0.0003 | 0.0003 | - | - | - | - | - | - | - |
| Y | 0.0021 | 3.4 | 0.6 | 2.8 | 0.03 | 0.0011 | 0.0011 | 0.0005 | 0.0002 | - | - | - | - | - | - | - |
| Z | 0.0019 | 3.8 | 0.2 | 0.7 | 0.25 | 0.0012 | 0.0014 | 0.0005 | 0.0005 | - | - | - | - | - | - | - |

| Steel | C | Si | Mn | Al | P | S | N | Mg | R | Sn | Sb | Cr | Ni | Cu | Ca | REM |
|-------|---|----|----|----|----|---|---|----|---|----|----|----|----|----|----|-----|
| AA | 0.0009 | 3.8 | 1.2 | 0.7 | 0.01 | 0.0031 | 0.0016 | 0.0045 | 0.0003 | - | - | - | - | - | - | - |
| AB | 0.0009 | 3.8 | 1.2 | 0.7 | 0.01 | 0.0008 | 0.0051 | 0.0009 | 0.0008 | - | - | - | - | - | - | - |
| AC | 0.0012 | 4.8 | 1.4 | 1.1 | 0.03 | 0.0012 | 0.0014 | 0.0005 | 0.0005 | - | - | - | - | - | - | - |
| AD | 0.0021 | 3.8 | 0.2 | 0.7 | 0.01 | 0.0004 | 0.0017 | 0.0068 | - | - | - | - | - | - | - | - |
| AE | 0.0019 | 3.8 | 0.3 | 0.7 | 0.01 | 0.0004 | 0.0017 | - | 0.0025 | - | - | - | - | - | - | - |
| AF | 0.0012 | 3.8 | 0.2 | 0.7 | 0.01 | 0.0003 | 0.0019 | - | - | - | - | - | - | - | - | - |
| AG | 0.0045 | 3.8 | 0.2 | 0.7 | 0.10 | 0.0003 | 0.0018 | 0.0004 | 0.0002 | - | - | - | - | - | - | - |
| AH | 0.0021 | 3.8 | 0.2 | 0.7 | 0.13 | 0.0003 | 0.0018 | 0.0070 | 0.0002 | - | - | - | - | - | - | - |
| AI | 0.0021 | 3.8 | 0.2 | 0.7 | 0.01 | 0.0003 | 0.0018 | 0.0095 | 0.0002 | - | - | - | - | - | - | - |
| AJ | 0.0021 | 3.8 | 0.2 | 0.7 | 0.01 | 0.0003 | 0.0018 | 0.0015 | 0.0009 | - | - | - | - | - | - | - |
| AK | 0.0021 | 3.8 | 0.2 | 0.7 | 0.01 | 0.0003 | 0.0018 | 0.0004 | 0.0002 | - | - | - | 3.5 | - | - | - |
| AL | 0.0021 | 3.8 | 0.2 | 0.7 | 0.01 | 0.0003 | 0.0018 | 0.0004 | 0.0002 | - | - | - | - | 1.6 | - | - |
| AM | 0.0021 | 3.8 | 0.04 | 0.7 | 0.01 | 0.0012 | 0.0018 | 0.0004 | 0.0002 | - | - | - | - | - | - | - |
| AN | 0.0021 | 3.8 | 0.2 | 0.02 | 0.01 | 0.0012 | 0.0018 | 0.0004 | 0.0002 | - | - | - | - | - | - | - |
| AO | 0.0013 | 3.5 | 0.2 | 0.7 | 0.01 | 0.0013 | 0.0039 | 0.0033 | 0.0003 | - | - | - | - | - | - | - |
| AP | 0.0023 | 3.8 | 0.2 | 0.6 | 0.01 | 0.0003 | 0.0025 | 0.0126 | 0.0002 | - | - | - | - | - | - | - |

Each slab having the components (the balance being Fe and impurities) shown in Table 1 was heated at each slab heating temperature shown in Tables 2-1 and 2-2 and hot rolled to manufacture each hot-rolled steel sheet with a sheet thickness of 2.2 mm. The finishing temperature FT (°C) during hot rolling was 890°C to 920°C, and the coiling temperature CT (°C) was 580°C to 650°C.

[Table 2-1]

| Test No. | Steel | Slab heating temperature (°C) | Final annealing | | | | After final annealing | | | | | | | | | | | | After additional heat treatment | | | | Remarks |
|---|---|---|---|---|---|---|---|---|---|---|---|---|---|---|---|---|---|---|---|---|---|---|---|
| | | | Heating rate S1 (°C/s) | Heating rate S2 (°C/s) | Heating rate S3 (°C/s) | Maximum reaching temperature (°C) | Sheet thickness deviation (μm) | Area fraction of crystal structure A (%) | Average grain size of crystal structure B (μm) | Average grain size (μm) | HvA | HvB | Equation 1 | TS (MPa) | Fatigue strength (MPa) | W10/400 (W/kg) | B50 (T) | Roundness | W10/400 (W/kg) | B50 (T) | Roundness | Average grain size after additional heat treatment (μm) | |
| 1-1 | A | 1150 | 350 | 150 | 60 | 720 | 5 | 7 | 13 | 43 | 265 | 264 | 0.3 | 677 | 474 | 19.6 | 1.68 | Excellent | 11.6 | 1.67 | Excellent | 75 | Invention example |
| 1-2 | B | 1150 | 400 | 200 | 80 | 720 | 3 | 9 | 15 | 42 | 259 | 254 | 6.3 | 667 | 467 | 19.2 | 1.66 | Good | 11.3 | 1.65 | Good | 79 | Invention example |
| 1-3 | C | 1130 | 600 | 250 | 25 | 720 | 8 | 12 | 21 | 42 | 260 | 264 | 4.0 | 678 | 475 | 19.0 | 1.66 | Good | 11.2 | 1.65 | Good | 81 | Invention example |
| 1-4 | D | 1080 | 700 | 200 | 40 | 720 | 7 | 10 | 25 | 43 | 261 | 264 | 2.3 | 707 | 495 | 18.7 | 1.65 | Very Good | 11.0 | 1.64 | Very Good | 77 | Invention example |
| 1-5 | E | 1080 | 350 | 150 | 50 | 720 | 9 | 15 | 21 | 45 | 259 | 262 | 2.3 | 667 | 467 | 19.2 | 1.66 | Very Good | 11.3 | 1.65 | Very Good | 76 | Invention example |
| 1-6 | F | 1130 | 400 | 200 | 70 | 720 | 2 | 21 | 22 | 43 | 262 | 264 | 1.0 | 644 | 451 | 20.2 | 1.69 | Excellent | 12.0 | 1.68 | Excellent | 81 | Invention example |
| 1-7 | G | 1100 | 700 | 250 | 20 | 720 | 5 | 16 | 14 | 45 | 259 | 255 | 4.0 | 698 | 489 | 18.6 | 1.66 | Good | 11.0 | 1.65 | Good | 85 | Invention example |
| 1-8 | H | 1150 | 350 | 280 | 50 | 720 | 4 | 8 | 14 | 44 | 259 | 262 | 2.3 | 679 | 476 | 19.6 | 1.69 | Very Good | 11.6 | 1.68 | Very Good | 78 | Invention example |
| 1-9 | I | 1150 | 400 | 250 | 80 | 720 | 3 | 10 | 16 | 43 | 260 | 264 | 4.0 | 670 | 469 | 19.2 | 1.67 | Good | 11.3 | 1.66 | Good | 84 | Invention example |
| 1-10 | J | 1130 | 600 | 200 | 30 | 720 | 7 | 14 | 22 | 42 | 259 | 255 | 4.0 | 691 | 484 | 19.0 | 1.66 | Good | 11.2 | 1.65 | Good | 86 | Invention example |
| 1-11 | K | 1080 | 700 | 150 | 60 | 720 | 5 | 12 | 26 | 43 | 259 | 254 | 6.3 | 718 | 503 | 18.7 | 1.65 | Good | 11.0 | 1.64 | Good | 79 | Invention example |
| 1-12 | L | 1080 | 350 | 110 | 90 | 720 | 7 | 14 | 22 | 45 | 259 | 264 | 6.3 | 676 | 473 | 19.2 | 1.66 | Good | 11.3 | 1.65 | Good | 83 | Invention example |
| 1-13 | M | 1130 | 400 | 200 | 95 | 720 | 6 | 19 | 23 | 44 | 259 | 254 | 6.3 | 647 | 453 | 20.0 | 1.69 | Good | 11.8 | 1.68 | Good | 84 | Invention example |
| 1-14 | N | 1100 | 700 | 250 | 60 | 720 | 2 | 18 | 15 | 41 | 263 | 264 | 0.3 | 701 | 491 | 18.4 | 1.66 | Excellent | 10.8 | 1.65 | Excellent | 77 | Invention example |
| 1-15 | O | 1150 | 350 | 280 | 70 | 720 | 7 | 9 | 16 | 46 | 259 | 264 | 6.3 | 687 | 481 | 19.6 | 1.69 | Good | 11.6 | 1.68 | Good | 87 | Invention example |
| 1-16 | P | 1150 | 400 | 110 | 80 | 720 | 2 | 11 | 18 | 48 | 259 | 257 | 1.0 | 670 | 469 | 19.2 | 1.68 | Excellent | 11.3 | 1.67 | Excellent | 91 | Invention example |
| 1-17 | Q | 1130 | 600 | 150 | 90 | 720 | 5 | 14 | 24 | 49 | 259 | 264 | 6.3 | 690 | 483 | 18.8 | 1.66 | Good | 11.0 | 1.65 | Good | 85 | Invention example |
| 1-18 | R | 1080 | 700 | 200 | 20 | 720 | 8 | 15 | 28 | 42 | 259 | 264 | 6.3 | 717 | 502 | 18.5 | 1.65 | Good | 10.8 | 1.64 | Good | 88 | Invention example |
| 1-19 | S | 1080 | 350 | 280 | 70 | 720 | 15 | 12 | 24 | 43 | 259 | 255 | 4.0 | 678 | 475 | 19.0 | 1.67 | Good | 11.1 | 1.66 | Good | 81 | Invention example |
| 1-20 | T | 1130 | 400 | 280 | 30 | 720 | 9 | 25 | 25 | 45 | 261 | 264 | 2.3 | 655 | 459 | 20.2 | 1.69 | Very Good | 12.0 | 1.69 | Very Good | 86 | Invention example |
| 1-21 | U | 1100 | 700 | 110 | 50 | 720 | 11 | 19 | 17 | 46 | 259 | 255 | 4.0 | 699 | 489 | 18.4 | 1.67 | Good | 10.8 | 1.66 | Good | 89 | Invention example |
| 1-22 | V | 1100 | 400 | 150 | 50 | 720 | 15 | 20 | 15 | 47 | 250 | 252 | 1.0 | 698 | 489 | 23.6 | 1.66 | Good | 15.0 | 1.65 | Good | 51 | Comparative example |
| 1-23 | W | 1100 | 400 | 150 | 50 | 720 | 12 | 18 | 31 | 49 | 205 | 209 | 2.3 | 504 | 353 | 24.9 | 1.66 | Good | 15.7 | 1.65 | Good | 82 | Comparative example |
| 1-24 | X | 1100 | 400 | 150 | 50 | 720 | 14 | 25 | 20 | 49 | 247 | 244 | 2.3 | 693 | 485 | 20.6 | 1.63 | Good | 15.4 | 1.62 | Good | 53 | Comparative example |
| 1-25 | Y | 1100 | 400 | 150 | 50 | 720 | 12 | 23 | 15 | 47 | 251 | 247 | 4.0 | 750 | 525 | 19.8 | 1.62 | Good | 12.9 | 1.61 | Good | 69 | Comparative example |
| 1-26 | Z | 1100 | Cracks were occurred during cold rolling | | | | | | | | | | | | | | | | | | | | Comparative example |

[Table 2-2]

| Test No. | Steel | Slab heating temperature (°C) | Final annealing | | | | After final annealing | | | | | | | | | | | | After additional heat treatment | | | | Remarks |
|---|---|---|---|---|---|---|---|---|---|---|---|---|---|---|---|---|---|---|---|---|---|---|---|
| | | | Heating rate S1 (°C/s) | Heating rate S2 (°C/s) | Heating rate S3 (°C/s) | Maximum reaching temperature (°C) | Sheet thickness deviation (μm) | Area fraction of crystal structure A (%) | Average grain size of crystal structure B (μm) | Average grain size (μm) | HvA | HvB | Equation 1 | TS (MPa) | Fatigue strength (MPa) | W10/400 (W/kg) | B50 (T) | Roundness | W10/400 (W/kg) | B50 (T) | Roundness | Average grain size after additional heat treatment (μm) | |
| 1-27 | AA | 1100 | 400 | 150 | 50 | 720 | 8 | 21 | 19 | 43 | 257 | 262 | 6.3 | 698 | 489 | 19.6 | 1.66 | Good | 16.0 | 1.65 | Good | 52 | Comparative example |
| 1-28 | AB | 1100 | 400 | 150 | 50 | 720 | 4 | 10 | 20 | 46 | 256 | 255 | 0.3 | 698 | 489 | 19.6 | 1.66 | Good | 16.0 | 1.65 | Good | 53 | Comparative example |
| 1-29 | AC | 1100 | Cracks were occurred during cold rolling | | | | | | | | | | | | | | | | | | | | Comparative example |
| 1-30 | AD | 1100 | 400 | 150 | 50 | 720 | 8 | 9 | 15 | 44 | 235 | 245 | 25.0 | 677 | 427 | 19.6 | 1.67 | Poor | 12.6 | 1.66 | Poor | 59 | Comparative example |
| 1-31 | AE | 1100 | 400 | 150 | 50 | 720 | 7 | 5 | 25 | 45 | 253 | 244 | 20.3 | 679 | 428 | 19.5 | 1.66 | Poor | 12.5 | 1.65 | Poor | 58 | Comparative example |
| 1-32 | AF | 1130 | 400 | 150 | 50 | 720 | 10 | 15 | 19 | 46 | 241 | 235 | 9.0 | 676 | 426 | 19.6 | 1.67 | Poor | 12.6 | 1.66 | Poor | 59 | Comparative example |
| 1-33 | AF | 1130 | 50 | 150 | 50 | 720 | 10 | 5 | 12 | 41 | 243 | 235 | 16.0 | 675 | 425 | 19.6 | 1.67 | Poor | 12.6 | 1.66 | Poor | 58 | Comparative example |
| 1-34 | A | 1150 | 350 | 350 | 350 | 720 | 5 | 8 | 12 | 49 | 267 | 262 | 6.3 | 672 | 457 | 19.8 | 1.68 | Good | 11.8 | 1.67 | Good | 71 | Invention example |
| 1-35 | A | 1150 | 1200 | 200 | 50 | 853 | 5 | 0.5 | 36 | 39 | 241 | 232 | 20.3 | 612 | 429 | 15.1 | 1.67 | Poor | 12.8 | 1.64 | Poor | 59 | Comparative example |
| 1-36 | A | 1150 | 350 | 350 | 350 | 680 | 5 | 39 | 5 | 35 | 265 | 275 | 25.0 | 692 | 443 | 23.6 | 1.63 | Poor | 13.6 | 1.63 | Poor | 57 | Comparative example |
| 1-37 | A | 1300 | 350 | 350 | 350 | 880 | 5 | 1 | 45 | 47 | 238 | 221 | 22.3 | 612 | 429 | 15.1 | 1.66 | Poor | 14.6 | 1.64 | Poor | 51 | Comparative example |
| 1-38 | A | 1150 | 250 | 250 | 250 | 920 | 5 | 0 | 52 | 52 | - | 215 | - | 592 | 415 | 14.8 | 1.66 | Poor | 12.9 | 1.64 | Poor | 59 | Comparative example |
| 1-39 | AG | 1150 | 400 | 150 | 60 | 720 | 5 | 7 | 14 | 45 | 271 | 269 | 1.0 | 704 | 492 | 19.5 | 1.68 | Excellent | 11.5 | 1.67 | Excellent | 74 | Invention example |
| 1-40 | AH | 1150 | 400 | 200 | 50 | 720 | 5 | 7 | 15 | 47 | 273 | 271 | 1.0 | 712 | 499 | 19.6 | 1.68 | Excellent | 11.4 | 1.67 | Excellent | 72 | Invention example |
| 1-41 | AI | 1150 | 500 | 200 | 25 | 720 | 5 | 8 | 15 | 49 | 266 | 264 | 1.0 | 680 | 490 | 19.5 | 1.68 | Excellent | 11.3 | 1.67 | Excellent | 73 | Invention example |
| 1-42 | AJ | 1150 | 600 | 250 | 60 | 750 | 5 | 5 | 16 | 48 | 265 | 263 | 1.0 | 683 | 492 | 19.4 | 1.68 | Excellent | 11.4 | 1.67 | Excellent | 77 | Invention example |
| 1-43 | AK | 1150 | 350 | 150 | 60 | 720 | 5 | 7 | 14 | 44 | 272 | 271 | 0.3 | 705 | 494 | 19.1 | 1.68 | Excellent | 11.2 | 1.67 | Excellent | 79 | Invention example |
| 1-44 | AL | 1150 | 350 | 150 | 60 | 720 | 5 | 8 | 15 | 41 | 268 | 266 | 1.0 | 687 | 481 | 19.5 | 1.68 | Excellent | 11.3 | 1.67 | Excellent | 75 | Invention example |
| 1-45 | AM | 1150 | 350 | 150 | 60 | 720 | 5 | 25 | 9 | 49 | 266 | 272 | 9.0 | 684 | 438 | 22.1 | 1.64 | Poor | 14.6 | 1.63 | Poor | 51 | Comparative example |
| 1-46 | AN | 1150 | 350 | 150 | 60 | 720 | 5 | 23 | 9 | 47 | 264 | 272 | 16.0 | 634 | 444 | 22.6 | 1.64 | Poor | 15.3 | 1.63 | Poor | 55 | Comparative example |
| 1-47 | AO | 1130 | 400 | 200 | 70 | 720 | 3 | 24 | 23 | 45 | 259 | 255 | 4.0 | 642 | 451 | 20.9 | 1.68 | Good | 12.2 | 1.67 | Good | 82 | Invention example |
| 1-48 | AP | 1150 | 500 | 200 | 25 | 740 | 5 | 9 | 16 | 48 | 245 | 235 | 25.0 | 652 | 441 | 19.5 | 1.68 | Poor | 12.6 | 1.67 | Poor | 65 | Comparative example |
| 1-49 | A | 1150 | 350 | 70 | 50 | 720 | 5 | 9 | 13 | 47 | 268 | 263 | 6.3 | 675 | 459 | 19.9 | 1.68 | Good | 11.9 | 1.67 | Good | 73 | Invention example |
| 1-50 | A | 1150 | 350 | 200 | 10 | 720 | 5 | 10 | 14 | 46 | 266 | 261 | 6.3 | 678 | 461 | 19.7 | 1.68 | Good | 11.9 | 1.67 | Good | 72 | Invention example |

Each manufactured hot-rolled steel sheet was subjected to hot-band annealing. In the hot-band annealing, the maximum reaching temperature was 900°C and the holding time was 2 minutes for all the test numbers.

The hot-rolled steel sheet after the hot-band annealing was cold rolled after pickling to manufacture an intermediate steel sheet. The rolling reduction during the cold rolling was 89% for all the test numbers. An intermediate steel sheet (cold-rolled steel sheet) having a sheet thickness of 0.25 mm was manufactured through the above-described process.

The intermediate steel sheet was subjected to final annealing. The maximum reaching temperature during the final annealing and the temperature increase rate (heating rate) in the temperature increase process from 500°C to 600°C were as shown in Tables 2-1 and 2-2. In addition, the holding time was 20 seconds for all the test numbers.

The non-oriented electrical steel sheet after final annealing was coated with a well-known insulation coating containing a phosphoric acid-based inorganic substance and an epoxy-based organic substance. Non-oriented electrical steel sheets of each test number were manufactured through the above-described process. As a result of analyzing the non-oriented electrical steel sheets after final annealing, chemical compositions thereof are as shown in Table 1.

[Evaluation test]

The following evaluation tests were performed on the manufactured non-oriented electrical steel sheets of each test number.

[Sheet thickness deviation]

Sheet thickness deviations were obtained for the non-oriented electrical steel sheets of each test number after the final annealing. In all the test numbers, the sheet width was 416 mm, the sheet thickness was measured at five points at intervals of 100 mm at a distance of 8 mm from both edges portions in the width direction at the same position in the longitudinal direction, and the difference between the maximum value and the minimum value was regarded as a sheet thickness deviation. After each steel sheet was sheared, the sheet thickness was measured at a distance of 8 mm from the sheared position in the longitudinal direction to avoid the influence of the shearing processing.

[Evaluation test for non-oriented electrical steel sheet after final annealing] [Crystal structure measurement test]

A sample including a cross section parallel to the rolled plane of the non-oriented electrical steel sheet of each test number after the final annealing was taken. The above-described cross section was regarded as a cross section at a depth of 1/4 of the sheet thickness from the sheet surface in the sheet thickness direction. The sample surface corresponding to this cross section was regarded as an observation surface.

After the observation surface of the sample was adjusted through electrolytic polishing, it was subjected to crystal structure analysis using an electron backscatter diffraction (EBSD) method. According to the EBSD analysis, in the observation surface, a boundary where the crystal orientation difference is 15° or more was defined as a crystal grain boundary, each region surrounded by the above-described crystal grain boundary was determined as one crystal grain, and a region (observation region) containing 10,000 or more crystal grains was regarded as an observation target. In the observation region, the diameter of a circle (equivalent circle diameter) having the same area as that of each crystal grain was defined as a grain size of each crystal grain.

A region composed of crystal grains having a grain size of 100 $\mu$m or more was defined as a crystal structure A, and the area fraction thereof was obtained. In addition, a region composed of crystal grains having a grain size of less than 100 $\mu$m was defined as a crystal structure B, and the average crystal grain size ($\mu$m) thereof was obtained. These measurements were obtained through image analysis of the observation regions.

[Hardness of crystal structure]

A Vickers hardness test according to JIS Z 2244 (2009) was performed at arbitrary 20 points within the crystal structure A region. The test force (load) was 50 g. The average value of the obtained Vickers hardness was regarded as hardness HvA of the crystal structure A.

Similarly, a Vickers hardness test according to JIS Z 2244 (2009) was performed at 20 arbitrary points within the crystal structure B region. The test force was 50 g. The average value of the obtained Vickers hardness was regarded as hardness HvB of the crystal structure B.

A value of Equation 1 below was calculated from the above-described hardness HvA and HvB, and it was confirmed whether the value was 7.0 or less.

$$(HvA^2 + HvB^2)/2 - (HvA + HvB)^2/4 \ldots \text{Equation 1}$$

[Tensile test]

A JIS No. 5 tensile test piece specified in JIS Z 2241 (2011) was manufactured from the non-oriented electrical steel sheets of each test number. A parallel portion of each tensile test piece was parallel to the rolling direction of each non-oriented electrical steel sheet. A tensile test was carried out in atmospheric air at normal temperature according to JIS Z 2241 (2011) using the manufactured tensile test piece to obtain a tensile strength TS (MPa).

[Fatigue test]

The fatigue strength can be obtained through a fatigue test specified in JIS Z 2273 (1978). Here, a hydraulic servo fatigue test machine (manufactured by Shimadzu Corporation, load capacity of 10 kN) was used to carry out a fatigue test through pulsating tension under the conditions of load control, a stress ratio of 0.1, and a frequency of 20 Hz at room temperature in an air atmosphere. The number of cycles of test termination in a case of no fracture was set to $10^7$ times, and the maximum stress at which no fracture occurred was regarded as fatigue strength (MPa). In the present invention, if the fatigue strength is 450 MPa or more, it was determined that the fatigue strength was excellent. Here, the length of the test piece was 180 mm, the width of a grip portion was 30 mm, the width was narrowed by R40, the width of the parallel portion was 10 mm, and the length of the parallel portion was 20 mm. In addition, the test piece was taken so that the longitudinal direction of the test piece coincided with the direction of 45° from the rolling direction.

[Roundness before additional heat treatment]

A 25t continuous progressive press apparatus with a perfect circle die was used to punch the non-oriented electrical steel sheet of each test number at a punching rate of 250 strokes/minute for a rotor with an outer diameter of 79.5 mm, and the punched sheets were interlocked to a core of 60 stacked sheets. The outer diameter of a circumference portion of the punched rotor core was measured, the ratio of the minimum value to the maximum value thereof was regarded as roundness, and the roundness was evaluated according to the following criteria.

Excellent: Roundness of 0.9999 or more and 1 or less
Very Good: Roundness of greater than 0.9998 and less than 0.9999
Good: Roundness of greater than 0.9997 to 0.9998 or less
Poor: Roundness of less than 0.9997

[Magnetic property evaluation test of non-oriented electrical steel sheet before additional heat treatment]

Epstein test pieces cut out from the non-oriented electrical steel sheet of each test number in the rolling direction (L-direction) and the direction perpendicular to the rolling direction (C-direction) were prepared according to JIS C 2550-1 (2011). The Epstein test pieces were subjected to a magnetic steel strip test method according to JIS C 2550-1 (2011) and 2550-3 (2011) to obtain magnetic properties (magnetic flux density $B_{50}$ and iron loss $W_{10/400}$). The magnetic flux density $B_{50}$ obtained through this test before additional heat treatment was defined as magnetic flux density BA (T).

[Magnetic property evaluation test of non-oriented electrical steel sheet after additional heat treatment]

Epstein test pieces cut out from the non-oriented electrical steel sheet of each test number in the rolling direction (L-direction) and the direction perpendicular to the rolling direction (C-direction) were prepared according to JIS C 2550-1 (2011). The Epstein test pieces were subjected to additional heat treatment in a nitrogen atmosphere at a heating rate of 100°C/hour, a maximum reaching temperature of 800°C, and a holding time at the maximum reaching temperature of 800°C of 2 hours.
The magnetic properties (magnetic flux density $B_{50}$ and iron loss $W_{10/400}$) were obtained for the Epstein test pieces after the additional heat treatment according to JIS C 2550-1 (2011) and 2550-3 (2011). The magnetic flux density $B_{50}$ obtained through this test after additional heat treatment was defined as magnetic flux density BB (T).

[Roundness after additional heat treatment]

A 25t continuous progressive press apparatus with a perfect circle die was used to punch the non-oriented electrical steel sheet of each test number at a punching rate of 250 strokes/minute for all of an inner diameter of 80.0 mm and an outer diameter of 100 mm, and the punched sheets were interlocked to a core of 60 stacked sheets. The obtained ring-shaped core simulates a stator core of a motor, and the roundness of an inner circumferential portion can be an index of the accuracy of an air gap with the rotor core. The above-described ring-shaped core was subjected to additional heat treatment in a nitrogen atmosphere at a heating rate of 100°C/hour, a maximum reaching temperature of 800°C, and a holding time at the maximum reaching temperature of 800°C of 2 hours. The diameter of the inner circumferential portion after the additional heat treatment was measured, the ratio of the minimum value to the maximum value thereof was regarded as roundness, and the roundness was evaluated according to the following criteria.

Excellent: Roundness of 0.9999 or more and 1 or les
Very Good: Roundness of greater than 0.9998 and less than 0.9999
Good: Roundness of greater than 0.9997 to 0.9998 or less
Poor: Roundness of less than 0.9997

A cross section of the sheet thickness direction and the rolling direction of the steel sheet was photographed with an optical microscope at a magnification of 50 times, 5 mm lines respectively parallel to sheet plane at the center of the sheet thickness and at two 1/4-thickness locations were drawn, and L which is a number obtained through dividing 15 mm by the total number of grain boundaries crossing each line was used to determine the average grain size D of a crystal structure after the additional heat treatment as D=1.12L.

[Test results]

The results obtained from the above-described evaluation tests are shown in Tables 2-1 and 2-2.
The chemical compositions of the non-oriented electrical steel sheets of Test Nos. 1-1 to 1-21 and 1-39 to 1-44, and 1-47 were appropriate, and their manufacturing conditions were also appropriate. As a result, the sheet thickness deviation was 20 μm or less, the area fraction of the crystal structure A was 1% to 30%, and the average grain size of the crystal structure B was 40 μm or less. Furthermore, Relational Equation 1 between the hardness HvA of the crystal structure A and the hardness HvB of the crystal structure B was 7.0 or less. The tensile strength TS was 640 MPa or more and the fatigue strength was 450 MPa or more, showing excellent strength. In addition, the roundness after punching (before additional heat treatment) was Good, Very Good, or Excellent.
Furthermore, the magnetic flux density BB after the additional heat treatment was 1.64 T or more and the iron loss $W_{10/400}$ was less than 12.5 W/kg, indicating excellent magnetic properties. Furthermore, the (BB/BA) ratio of the magnetic flux density BB after the additional heat treatment to the magnetic flux density BA before the additional heat treatment was 0.990 or more, and the decrease in magnetic flux density was suppressed even after the additional heat treatment. In addition, the roundness after the additional heat treatment was Good, Very Good, or Excellent.
On the other hand, in Test No. 1-22, the amount of C was outside the range of the present invention. As a result, the iron loss $W_{10/400}$ was greater than 12.5 W/kg.
In Test No. 1-23, the amount of Si was below the range of the present invention. As a result, sufficient tensile strength and fatigue strength could not be achieved, the iron loss $W_{10/400}$ was greater than 12.5 W/kg.
In Test No. 1-24, the amount of Mn was outside the range of the present invention. As a result, the magnetic flux density BB was as low as less than 1.64 T, and the iron loss $W_{10/400}$ was greater than 12.5 W/kg.
In Test No. 1-25, the amount of Al was outside the range of the present invention. As a result, the magnetic flux density BB was as low as less than 1.64 T, and the iron loss $W_{10/400}$ was greater than 12.5 W/kg.
In Test No. 1-26, the amount of P was outside the range of the present invention. As a result, cracks occurred during cold rolling, and subsequent processes could not be carried out.
In Test No. 1-27, the amount of S was outside the range of the present invention. As a result, the iron loss $W_{10/400}$ after the additional heat treatment was greater than 12.5 W/kg.
In Test No. 1-28, the amount of N was outside the range of the present invention. As a result, the iron loss $W_{10/400}$ after the additional heat treatment was greater than 12.5 W/kg.
In Test No. 1-29, the amount of Si exceeded the range of the present invention. As a result, cracks occurred during cold rolling, and subsequent processes could not be carried out.
In Test No. 1-30, the amount of B was below the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.
In Test No. 1-31, the amount of B exceeded the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was 12.5 W/kg or more, and the roundness after the additional heat treatment was Poor.
In Test No. 1-32, the amount of Mg and B was below the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.
In Test No. 1-33, the amount of Mg and B was below the range of the present invention, the temperature increase rate (heating rate) during the final annealing was outside the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-34, since the heating rate during the final annealing was constant, the value of Relational Equation 1 of hardness between the crystal structure A and the crystal structure B was large compared to Test No. 1-1 which had the same steel composition and heating rate S1. As a result, both the roundness after punching and the roundness after the additional heat treatment were Good.

In Test No. 1-49, the heating rate S2 during the final annealing was below the lower limit of the preferred range. In addition, in Test No. 1-50, the heating rate S3 during the final annealing was below the lower limit of the preferred range. For comparison, in these examples, Relational Equation 1 of hardness between the crystal structure A and the crystal structure B was large compared to Test No. 1-1 which had the same steel composition and heating rate S1. As a result, both the roundness after punching and the roundness after the additional heat treatment were Good.

In Test No. 1-35, the heating rate and the maximum reaching temperature during the final annealing were outside the upper limit of the range of the present invention. For this reason, the area fraction of the crystal structure A was low, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-36, the maximum reaching temperature of the final annealing was below the lower limit of the range of the present invention, the area fraction of the crystal structure A was high, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-37, the slab heating temperature was high, the maximum reaching temperature of the final annealing exceeded the upper limit of the range of the present invention, the grain size of the crystal structure B was large, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-38, the heating rate during the final annealing was below the lower limit of the range of the present invention, and the maximum reaching temperature exceeded the upper limit of the range of the present invention. For this reason, the area fraction of the crystal structure A was low, so the hardness of the crystal structure A could not be measured, whereby the value of Relational Equation 1 of the hardness could not be obtained. Furthermore, the grain size of the crystal structure B was also large. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-45, the amount of Mn was below the lower limit of the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-46, the amount of Al was below the lower limit of the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 1-48, the amount of Mg exceeded the upper limit of the range of the present invention, and the value of Relational Equation 1 of hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

(Example 2)

Slabs of steel types A to G in Table 1 were prepared. The prepared slabs were heated at slab heating temperatures shown in Table 3 and hot rolled to manufacture hot-rolled steel sheets with a sheet thickness of 2.2 mm. The finishing temperature FT during hot rolling was 890°C to 920°C, and the coiling temperature CT was 580°C to 630°C.

[Table 3]

| Test No. | Steel | Slab heating temperature (°C) | Heating rate S1 (°C/s) | Heating rate S2 (°C/s) | Heating rate S3 (°C/s) | Maximum reaching temperature (°C) | Sheet thickness deviation (μm) | Area fraction of crystal structure A (%) | Average grain size of crystal structure B (μm) | Average grain size (μm) | HvA | HvB | Equation 1 | TS (MPa) | Fatigue strength (MPa) | W10/400 (W/kg) | B50 (T) | Roundness | W10/400 (W/kg) | B50 (T) | Roundness | Average grain size after additional heat treatment (μm) | Remarks |
|---|---|---|---|---|---|---|---|---|---|---|---|---|---|---|---|---|---|---|---|---|---|---|---|
| 2-1 | A | 1150 | 350 | 300 | 50 | 720 | 5 | 8 | 14 | 44 | 266 | 264 | 1.0 | 677 | 474 | 19.6 | 1.68 | Excellent | 11.6 | 1.67 | Excellent | 78 | Invention example |
| 2-2 | A | 1210 | 350 | 200 | 30 | 720 | 3 | 9 | 15 | 43 | 253 | 262 | 20.3 | 672 | 430 | 20.2 | 1.68 | Poor | 12.5 | 1.64 | Poor | 59 | Comparative example |
| 2-3 | B | 1150 | 400 | 300 | 60 | 720 | 2 | 10 | 16 | 44 | 259 | 255 | 4.0 | 667 | 467 | 19.2 | 1.66 | Good | 11.3 | 1.65 | Good | 82 | Invention example |
| 2-4 | B | 1150 | 400 | 250 | 90 | 860 | 5 | 0 | 45 | 45 | - | 230 | - | 600 | 420 | 14.2 | 1.66 | Poor | 13.1 | 1.65 | Poor | 58 | Comparative example |
| 2-5 | C | 1130 | 600 | 200 | 30 | 720 | 7 | 13 | 22 | 47 | 259 | 264 | 6.3 | 678 | 475 | 19.0 | 1.66 | Good | 11.2 | 1.65 | Good | 83 | Invention example |
| 2-6 | C | 1130 | 1050 | 300 | 100 | 800 | 6 | 0 | 45 | 45 | - | 230 | - | 643 | 431 | 18.5 | 1.66 | Poor | 12.9 | 1.65 | Poor | 58 | Comparative example |
| 2-7 | D | 1080 | 700 | 250 | 70 | 720 | 15 | 11 | 26 | 46 | 260 | 264 | 4.0 | 707 | 495 | 18.7 | 1.65 | Good | 11.0 | 1.64 | Good | 81 | Invention example |
| 2-8 | D | 1080 | 50 | 100 | 20 | 720 | 17 | 15 | 19 | 43 | 241 | 235 | 9.0 | 667 | 447 | 19.0 | 1.65 | Poor | 12.6 | 1.64 | Poor | 59 | Comparative example |
| 2-9 | E | 1080 | 300 | 200 | 30 | 720 | 6 | 16 | 22 | 49 | 259 | 261 | 1.0 | 667 | 467 | 19.2 | 1.66 | Excellent | 11.3 | 1.65 | Excellent | 85 | Invention example |
| 2-10 | E | 1080 | 300 | 100 | 70 | 650 | 12 | - | - | - | - | - | - | 702 | 442 | 24.2 | 1.60 | Poor | 11.5 | 1.64 | Poor | 59 | Comparative example |
| 2-11 | F | 1130 | 400 | 150 | 30 | 720 | 6 | 20 | 21 | 42 | 263 | 264 | 0.3 | 644 | 451 | 20.2 | 1.69 | Excellent | 12.0 | 1.68 | Excellent | 83 | Invention example |
| 2-12 | F | 1130 | 400 | 100 | 20 | 860 | 9 | 0 | 46 | 46 | - | 220 | - | 564 | 395 | 15.2 | 1.69 | Poor | 12.6 | 1.68 | Poor | 58 | Comparative example |
| 2-13 | G | 1100 | 700 | 200 | 40 | 720 | 11 | 14 | 15 | 47 | 259 | 254 | 6.3 | 698 | 480 | 18.6 | 1.66 | Good | 11.0 | 1.65 | Good | 87 | Invention example |
| 2-14 | G | 1100 | 50 | 80 | 10 | 920 | 13 | 0 | 52 | 52 | - | 210 | - | 628 | 440 | 15.6 | 1.66 | Poor | 12.6 | 1.64 | Poor | 59 | Comparative example |
| 2-15 | G | 1250 | 50 | 50 | 20 | 700 | 12 | 35 | 40 | 53 | 242 | 232 | 25.0 | 625 | 437 | 19.1 | 1.66 | Poor | 12.8 | 1.63 | Poor | 57 | Comparative example |
| 2-16 | G | 1100 | 400 | 250 | 20 | 720 | 12 | 20 | 21 | 43 | 240 | 232 | 16.0 | 628 | 434 | 19.4 | 1.63 | Poor | 13.1 | 1.62 | Poor | 58 | Comparative example |
| 2-17 | G | 1100 | Cracks were occurred during cold rolling | | | | | | | | | | | | | | | | | | | | Comparative example |
| 2-18 | A | 1150 | 350 | 350 | 350 | 720 | 5 | 9 | 15 | 42 | 264 | 259 | 6.3 | 670 | 456 | 19.8 | 1.67 | Good | 11.8 | 1.67 | Good | 75 | Invention example |
| 2-19 | A | 1150 | 1200 | 200 | 60 | 855 | 5 | 0.5 | 35 | 38 | 242 | 238 | 20.3 | 607 | 425 | 15.1 | 1.67 | Poor | 12.8 | 1.64 | Poor | 59 | Comparative example |
| 2-20 | A | 1150 | 350 | 120 | 90 | 680 | 5 | 36 | 11 | 37 | 266 | 277 | 30.3 | 704 | 444 | 23.3 | 1.63 | Poor | 13.8 | 1.63 | Poor | 58 | Comparative example |
| 2-21 | A | 1300 | 350 | 350 | 350 | 880 | 5 | 1 | 44 | 46 | 232 | 218 | 49.0 | 602 | 422 | 15.1 | 1.66 | Poor | 14.6 | 1.64 | Poor | 51 | Comparative example |
| 2-22 | A | 1150 | 250 | 250 | 250 | 920 | 5 | 0 | 53 | 53 | - | 210 | - | 592 | 415 | 14.6 | 1.66 | Poor | 12.9 | 1.64 | Poor | 58 | Comparative example |

Each manufactured hot-rolled steel sheet was subjected to hot-band annealing. In the hot-band annealing, the maximum reaching temperature was 950°C and the holding time was 2 minutes for Test Nos. 2-1 to 2-15. In addition, the maximum reaching temperature was 800°C and the holding time was 2 minutes in Test No. 2-16, and the maximum reaching temperature was 1170°C and the holding time was 2 minutes in Test No. 2-17.

The hot-rolled steel sheet after the hot-band annealing was cold rolled after pickling to manufacture an intermediate steel sheet. The rolling reduction during the cold rolling was 89% for all the test numbers. An intermediate steel sheet (cold-rolled steel sheet) having a sheet thickness of 0.25 mm was manufactured through the above-described process.

The intermediate steel sheet was subjected to final annealing. The maximum reaching temperature during the final annealing and the temperature increase rate (heating rate) in the temperature increase process from 500°C to 600°C were as shown in Table 3. In addition, the holding time was 20 seconds for all the test numbers.

The non-oriented electrical steel sheet after final annealing was coated with a well-known insulation coating containing a phosphoric acid-based inorganic substance and an epoxy-based organic substance. Non-oriented electrical steel sheets of each test number were manufactured through the above-described process. As a result of analyzing the non-oriented electrical steel sheets after final annealing, chemical compositions thereof are as shown in Table 1.

[Evaluation test]

By the same method as in Example 1, the sheet thickness deviation, the area fraction (%) of the crystal structure A, the average crystal grain size (μm) of the crystal structure B, the Vickers hardness HvA of the crystal structure A, the Vickers hardness HvB of the crystal structure B, the value of Relational Equation 1 between a hardness HvA and a hardness HvB, the tensile strength TS (MPa), the fatigue strength (MPa), the magnetic flux density BA before additional heat treatment, the iron loss $W_{10/400}$, and the roundness after punching (before additional heat treatment) were obtained for the non-oriented electrical steel sheets after final annealing. The additional heat treatment conditions were the same as in Example 1.

Furthermore, by the same method as in Example 1, the magnetic properties (magnetic flux density BB and iron loss $W_{10/400}$), the roundness after additional heat treatment, and the average grain size of the crystal structure after additional heat treatment were obtained for the non-oriented electrical steel sheets after additional heat treatment.

[Test results]

The obtained results are shown in Table 3.

The chemical compositions of the non-oriented electrical steel sheets of Test Nos. 2-1, 2-3, 2-5, 2-7, 2-9, 2-11, and 2-13 were appropriate, and their manufacturing conditions were also appropriate. As a result, the sheet thickness

deviation was 20 $\mu$m or less, the area fraction of the crystal structure A was 1% to 30%, and the average grain size of the crystal structure B was 40 $\mu$m or less. Furthermore, the value of Relational Equation 1 between the hardness HvA of the crystal structure A and the hardness HvB of the crystal structure B was 7.0 or less. For this reason, the tensile strength TS was 640 MPa or more and the fatigue strength was 450 MPa or more, showing excellent strength. In addition, the roundness after punching (before additional heat treatment) was Good or Excellent.

Furthermore, the magnetic flux density BB after the additional heat treatment was 1.64 T or more and the iron loss $W_{10/400}$ was less than 12.5 W/kg, indicating excellent magnetic properties. Furthermore, the (BB/BA) ratio of the magnetic flux density BB after the additional heat treatment to the magnetic flux density BA before the additional heat treatment was 0.990 or more, and the decrease in magnetic flux density was suppressed even after the additional heat treatment. In addition, the roundness after the additional heat treatment was Good or Excellent.

On the other hand, in Test No. 2-2, the slab heating temperature was too high. For this reason, the value of Relational Equation 1 of the hardness between the crystal structure A and the crystal structure B was outside the range of the present invention. As a result, sufficient fatigue strength could not be achieved, and the roundness after punching and after the additional heat treatment was also Poor. Furthermore, the iron loss $W_{10/400}$ after the additional heat treatment was 12.5 W/kg or more.

In Test Nos. 2-4, 2-12, and 2-14, the maximum reaching temperature of the final annealing exceeded 800°C. For this reason, the area fraction of the crystal structure A was lower than 1%, so the hardness of the crystal structure A could not be measured, whereby the value of Relational Equation 1 of the hardness could not be obtained. As a result, the tensile strength TS was less than 640 MPa and the fatigue strength was less than 450 MPa, whereby sufficient strength could not be achieved, and the roundness after punching and after the additional heat treatment was also Poor. Furthermore, the iron loss $W_{10/400}$ after the additional heat treatment was greater than 12.5 W/kg.

In Test No. 2-6, the temperature increase rate (heating rate) during the final annealing was higher than the range of the present invention. For this reason, the area fraction of the crystal structure A was lower than 1%, so the hardness of the crystal structure A could not be measured, whereby the value of Relational Equation 1 of the hardness could not be obtained. As a result, the fatigue strength was less than 450 MPa, whereby sufficient strength could not be achieved, and the roundness after punching and after the additional heat treatment was also Poor. Furthermore, the iron loss $W_{10/400}$ after the additional heat treatment was greater than 12.5 W/kg.

In Test No. 2-8, the temperature increase rate (heating rate) during the final annealing was lower than the range of the present invention. For this reason, the value of Relational Equation 1 of the hardness between the crystal structure A and the crystal structure B exceeded 7.0. As a result, the fatigue strength was less than 450 MPa, whereby sufficient strength could not be achieved, and the roundness after punching and after the additional heat treatment was also Poor. Furthermore, the iron loss $W_{10/400}$ after the additional heat treatment was greater than 12.5 W/kg.

In Test No. 2-10, the maximum reaching temperature of the final annealing was lower than 700°C. For this reason, desired crystal structure A and crystal structure B could not be obtained, and a desired value of Relational Equation 1 of the hardness could also not be obtained. As a result, the fatigue strength was less than 450 MPa, whereby sufficient strength could not be achieved, and the roundness after punching and after the additional heat treatment was also Poor. Furthermore, the iron loss $W_{10/400}$ and magnetic flux density BA before the additional heat treatment were low.

In Test No. 2-15, the slab heating temperature was higher than the range of the present invention, and the heating rate during the final annealing was low. For this reason, desired crystal structure A and crystal structure B could not be obtained, and a desired value of Relational Equation 1 of the hardness could also not be obtained. As a result, the fatigue strength was less than 450 MPa, whereby sufficient strength could not be achieved, and the roundness after punching and after the additional heat treatment was also Poor. Furthermore, the iron loss $W_{10/400}$ before and after the additional heat treatment was large and the magnetic flux density BB was low.

In Test No. 2-16, the hot-band annealing temperature was lower than the range of the present invention. For this reason, desired crystal structure A and crystal structure B could not be obtained, and a desired value of Relational Equation 1 of the hardness could also not be obtained. As a result, the fatigue strength was less than 450 MPa, whereby sufficient strength could not be achieved, and the roundness after punching and after the additional heat treatment was also Poor. Furthermore, the iron loss $W_{10/400}$ before and after the additional heat treatment was large, and the magnetic flux densities BA and BB were low.

In Test No. 2-17, the hot-band annealing temperature was lower than the range of the present invention. For this reason, cracks occurred during cold rolling, and subsequent processes could not be carried out.

In Test No. 2-18, since the heating rate during the final annealing was constant, the value of Relational Equation 1 of hardness between the crystal structure A and the crystal structure B was large compared to Test No. 2-1 which had the same steel composition and heating rate S1. As a result, both the roundness after punching and the roundness after the additional heat treatment were Good.

In Test No. 2-19, the heating rate and maximum reaching temperature of the final annealing exceeded the upper limit of the range of the present invention, the area fraction of the crystal structure A was low, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 2-20, the maximum reaching temperature of the final annealing was below the lower limit of the range of the present invention, the area fraction of the crystal structure A was high, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 2-21, the slab heating temperature was high, the maximum reaching temperature of the final annealing exceeded the upper limit of the range of the present invention, the grain size of the crystal structure B was large, and the value of Relational Equation 1 of the hardness between the crystal structure A and the crystal structure B was outside the range of the present invention. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

In Test No. 2-22, the heating rate during the final annealing was below the lower limit of the range of the present invention, and the maximum reaching temperature exceeded the upper limit of the range of the present invention. For this reason, the area fraction of the crystal structure A was low, so the hardness of the crystal structure A could not be measured, whereby the value of Relational Equation 1 of the hardness could not be obtained. Furthermore, the grain size of the crystal structure B was also large. As a result, sufficient fatigue strength could not be achieved, and the roundness after punching was also Poor. Furthermore, the iron loss $W_{10/400}$ after the additional heat treatment was greater than 12.5 W/kg, and the roundness after the additional heat treatment was Poor.

(Example 3)

Slabs of steel types A, H, and O in Table 1 were prepared. In Test Nos. 3-1 to 3-30, the prepared slabs were heated at a slab heating temperature of 1150°C and hot rolled to manufacture hot-rolled steel sheets.

In all the test numbers, the finishing temperature FT during hot rolling was 890°C to 920°C, and the coiling temperature CT was 590°C to 630°C.

[Table 4]

| Test No | Steel | Sheet thickness deviation | Area fraction of crystal (%) | Average grain size of crystal structure B (μm) | Average grain size (μm) | HvA | HvB | Equation 1 | TS (MPa) | Fatigue strength | W10/400 (W/kg) | B50 (T) | Roundness | Additional heat treatment temperature (°C) | $W_{10/4-00}$ (W/kg) | B50 (T) | Roundness | Average grain size after additional heat treatment (μm) | Remarks |
|---|---|---|---|---|---|---|---|---|---|---|---|---|---|---|---|---|---|---|---|
| 3-1 | A | 5 | 8 | 11 | 11 | 266 | 264 | 1.0 | 677 | 474 | 19.6 | 1.68 | Excellent | 750 | 12.4 | 1.67 | Excellent | 65 | Invention example |
| 3-2 | A | 5 | 8 | 14 | 44 | 266 | 264 | 1.0 | 677 | 474 | 19.6 | 1.68 | Excellent | 800 | 11.6 | 1.67 | Excellent | 78 | Invention example |
| 3-3 | A | 5 | 8 | 11 | 11 | 266 | 264 | 1.0 | 677 | 474 | 19.6 | 1.68 | Excellent | 850 | 10.9 | 1.67 | Excellent | 125 | Invention example |
| 3-4 | A | 5 | 8 | 14 | 44 | 266 | 264 | 1.0 | 677 | 474 | 19.6 | 1.68 | Excellent | 875 | 9.8 | 1.67 | Excellent | 192 | Invention example |
| 3-5 | A | 5 | 8 | 11 | 11 | 266 | 264 | 1.0 | 677 | 474 | 19.6 | 1.68 | Excellent | 950 | 13.2 | 1 61 | Good | 215 | Invention example |
| 3-6 | A | 25 | 9 | 15 | 45 | 267 | 264 | 2.3 | 675 | 473 | 19.7 | 1.68 | Vary Good | 750 | 12.6 | 1.66 | Poor | 61 | Invention example |
| 3-7 | A | 25 | 9 | 15 | 45 | 267 | 264 | 2.3 | 675 | 473 | 19.7 | 1.68 | Very Good | 800 | 11.8 | 1.66 | Poor | 75 | Invention example |
| 3-8 | A | 25 | 9 | 15 | 45 | 267 | 264 | 2.3 | 675 | 473 | 19.7 | 1.68 | Vary Good | 850 | 11.3 | 1.66 | Poor | 131 | Invention example |
| 3-9 | A | 25 | 9 | 15 | 45 | 267 | 264 | 2.3 | 675 | 473 | 19.7 | 1.68 | Very Good | 875 | 10.4 | 1.66 | Poor | 189 | Invention example |
| 3-10 | A | 25 | 9 | 15 | 45 | 267 | 264 | 2.3 | 675 | 473 | 19.7 | 1.68 | Very Good | 950 | 13.5 | 1.64 | Poor | 225 | Invention example |
| 3-11 | H | 4 | 8 | 14 | 46 | 259 | 262 | 2.3 | 679 | 476 | 19.6 | 1.69 | Very Good | 750 | 12.3 | 1.68 | Very Good | 63 | Invention example |
| 3-12 | H | 4 | 8 | 14 | 46 | 259 | 262 | 2.3 | 679 | 476 | 19.6 | 1.69 | Very Good | 800 | 11.6 | 1.68 | Very Good | 77 | Invention example |
| 3-13 | H | 4 | 8 | 14 | 46 | 259 | 262 | 2.3 | 679 | 476 | 19.6 | 1.69 | Very Good | 850 | 10.8 | 1.68 | Very Good | 135 | Invention example |
| 3-14 | H | 4 | 8 | 14 | 46 | 259 | 262 | 2.3 | 679 | 476 | 19.6 | 1.69 | Very Good | 875 | 9.7 | 1.68 | Very Good | 189 | Invention example |

After final annealing

(continued)

| Test No | Steel | Sheet thickness deviation | Area fraction of crystal (%) | Average grain size of crystal structure B (μm) | Average grain size (μm) | HvA | HvB | Equation 1 | TS (MPa) | Fatigue strength | W10/400 (W/kg) | B50 (T) | Roundness | Additional heat treatment temperature (°C) | $W_{10/4-00}$ (W/kg) | B50 (T) | Roundness | Average grain size after additional heat treatment (μm) | Remarks |
|---|---|---|---|---|---|---|---|---|---|---|---|---|---|---|---|---|---|---|---|
| 3-15 | H | 4 | 8 | 14 | 46 | 259 | 262 | 2.3 | 679 | 476 | 19.6 | 1.69 | Very Good | 950 | 13.3 | 1.65 | Good | 219 | Invention example |
| 3-16 | H | 2 | 7 | 15 | 45 | 259 | 263 | 1.0 | 677 | 474 | 19.7 | 1.69 | Good | 750 | 12.5 | 1.68 | Poor | 61 | Invention example |
| 3-17 | H | 23 | 7 | 15 | 45 | 259 | 263 | 4.0 | 679 | 476 | 19.7 | 1.69 | Good | 800 | 11.8 | 1.68 | Poor | 88 | Invention example |
| 3-18 | H | 2 | 7 | 15 | 45 | 259 | 263 | 1.0 | 679 | 476 | 19.7 | 1.69 | Good | 850 | 11.1 | 1.68 | Poor | 145 | Tovention example |
| 3-19 | H | 23 | 7 | 15 | 45 | 259 | 263 | 4.0 | 679 | 476 | 19.7 | 1.69 | Good | 875 | 10.1 | 1.68 | Poor | 179 | Invention example |
| 3-20 | H | 2 | 7 | 15 | 45 | 259 | 263 | 1.0 | 679 | 171 | 19.7 | 1.68 | Good | 950 | 13.7 | 1.61 | Poor | 205 | Invention example |
| 3-21 | O | 7 | 9 | 16 | 44 | 259 | 264 | 6.3 | 687 | 481 | 19.6 | 1.69 | Good | 750 | 12.3 | 1.68 | Good | 64 | Invention example |
| 3-22 | O | 7 | 9 | 16 | 44 | 259 | 264 | 6.3 | 687 | 181 | 19.6 | 1.69 | Good | 800 | 11.6 | 1.68 | Good | 83 | Invention example |
| 3-23 | O | 7 | 9 | 16 | 44 | 259 | 264 | 6.3 | 687 | 481 | 19.6 | 1.69 | Good | 850 | 10.4 | 1.68 | Good | 149 | Invention example |
| 3.21 | O | 7 | 9 | 16 | 44 | 259 | 264 | 6.3 | 687 | 481 | 19.6 | 1.69 | Good | 875 | 9.6 | 1.68 | Good | 186 | Invention example |
| 3-25 | O | 7 | 9 | 16 | 44 | 259 | 264 | 6.3 | 687 | 481 | 19.6 | 1.69 | Good | 950 | 13.8 | 1.65 | Good | 225 | Invention example |
| 3-26 | O | 24 | 10 | 15 | 43 | 259 | 263 | 4.0 | 685 | 480 | 19.8 | 1.69 | Good | 750 | 12.5 | 1.68 | Poor | 61 | Invention example |
| 3-27 | O | 24 | 10 | 15 | 43 | 259 | 263 | 4.0 | 685 | 480 | 19.8 | 1.69 | Good | 800 | 11.8 | 1.68 | Poor | 86 | Invention example |
| 3-28 | O | 24 | 10 | 15 | 43 | 259 | 263 | 4.0 | 685 | 480 | 19.8 | 1.69 | Good | 850 | 10.8 | 1.68 | Poor | 153 | Invention example |

After final annealing

(continued)

| Test No | Steel | Sheet thickness deviation | Area fraction of crystal (%) | Average grain size of crystal structure B (μm) | After final annealing | | | | | | | | | | | | | | Remarks |
|---|---|---|---|---|---|---|---|---|---|---|---|---|---|---|---|---|---|---|---|
| | | | | | Average grain size (μm) | HvA | HvB | Equation 1 | TS (MPa) | Fatigue strength | W10/400 (W/kg) | B50 (T) | Roundness | Additional heat treatment temperature (°C) | W$_{10/400}$ (W/kg) | B50 (T) | Roundness | Average grain size after additional heat treatment (μm) | |
| 3-29 | O | 24 | 10 | 15 | 43 | 259 | 263 | 4.0 | 685 | 480 | 19.8 | 1.69 | Good | 875 | 10.2 | 1.68 | Poor | 182 | Invention example |
| 3-30 | O | 24 | 10 | 15 | 43 | 259 | 263 | 4.0 | 685 | 480 | 19.8 | 1.69 | Good | 950 | 14.5 | 1.65 | Poor | 215 | Invention example |

Each manufactured hot-rolled steel sheet was subjected to hot-band annealing. In the hot-band annealing, the maximum reaching temperature was 950°C and the holding time was 2 minutes for all the test numbers.

The hot-rolled steel sheet after the hot-band annealing was cold rolled after pickling to manufacture an intermediate steel sheet. The rolling reduction during the cold rolling was 89% for all the test numbers. An intermediate steel sheet (cold-rolled steel sheet) having a sheet thickness of 0.25 mm was manufactured through the above-described process.

The intermediate steel sheet was subjected to final annealing. In the final annealing, the maximum reaching temperature was 720°C for all the test numbers and the holding time was 20 seconds for all the test numbers. In addition, the temperature increase rate (heating rate) in the temperature increase process from 500°C to 600°C was 350 °C/second. Here, the heating rate from room temperature to 500°C was 120 °C/second, and the heating rate from 600°C to a maximum reaching temperature was 60 °C/second.

The non-oriented electrical steel sheet after final annealing was coated with a well-known insulation coating containing a phosphoric acid-based inorganic substance and an epoxy-based organic substance. Non-oriented electrical steel sheets of each test number were manufactured through the above-described process. As a result of analyzing the non-oriented electrical steel sheets after final annealing, chemical compositions thereof are as shown in Table 1.

[Evaluation test]

By the same method as in Example 1, the sheet thickness deviation, the area fraction (%) of the crystal structure A, the average crystal grain size ($\mu$m) of the crystal structure B, the Vickers hardness HvA of the crystal structure A, the Vickers hardness HvB of the crystal structure B, the value of Relational Equation 1 between a hardness HvA and a hardness HvB, the tensile strength TS (MPa), the fatigue strength (MPa), the magnetic flux density BA before additional heat treatment, the iron loss $W_{10/400}$, and the roundness after punching (before additional heat treatment) were obtained for the non-oriented electrical steel sheets after final annealing.

[Magnetic property evaluation test of non-oriented electrical steel sheet after additional heat treatment]

Epstein test pieces cut out from the non-oriented electrical steel sheet of each test number in the rolling direction (L-direction) and the direction perpendicular to the rolling direction (C-direction) were prepared according to JIS C 2550-1 (2011). The Epstein test pieces were subjected to additional heat treatment in a nitrogen atmosphere at a heating rate of 100°C/hour, the maximum reaching temperatures shown in Table 4, and the holding time of 2 hours at the maximum reaching temperatures.

The magnetic properties (magnetic flux density $B_{50}$ and iron loss $W_{10/400}$) were obtained for the Epstein test pieces after the additional heat treatment. The magnetic flux density $B_{50}$ obtained through this test after additional heat treatment was defined as magnetic flux density BB (T). In addition, the roundness after the additional heat treatment and the average grain size of the crystal structure after additional heat treatment were obtained through the same method as in Example 1.

[Test results]

The obtained results are shown in Table 4.

The chemical compositions of the non-oriented electrical steel sheets of Test Nos. 3-1 to 3-4, 3-11 to 3-14, and 3-21 to 3-24 were appropriate, and their manufacturing conditions were also appropriate. As a result, the sheet thickness deviation was 20 $\mu$m or less, the area fraction of the crystal structure A was 1% to 30%, and the average grain size of the crystal structure B was 40 $\mu$m or less. Furthermore, Relational Equation 1 between the hardness HvA of the crystal structure A and the hardness HvB of the crystal structure B was 7.0 or less. The tensile strength TS was 640 MPa or more and the fatigue strength was 450 MPa or more, showing excellent strength.

Furthermore, the conditions for the additional heat treatment also satisfied the preferred conditions. As a result, the magnetic flux density BB after the additional heat treatment was greater than 1.65 T and the iron loss $W_{10/400}$ was less than 12.5 W/kg, indicating excellent magnetic properties. Furthermore, the (BB/BA) ratio of the magnetic flux density BB after the additional heat treatment to the magnetic flux density BA before the additional heat treatment was 0.980 or more, and the decrease in magnetic flux density was suppressed even after the additional heat treatment. In addition, the roundness was Good, Very Good, or Excellent.

On the other hand, the non-oriented electrical steel sheets of Test Nos. 3-6 to 3-10, 3-16 to 3-20, and 3-26 to 3-30 had a sheet thickness deviation of greater than 20 $\mu$m. In addition, the roundness after the additional heat treatment was Poor. However, the roundness before the additional heat treatment was excellent.

The maximum reaching temperature of the additional heat treatment of Test Nos. 3-5, 3-10, 3-15, 3-20, 3-25, and 3-30 was 950°C, which does not satisfy the preferred conditions of the present invention. Therefore, excellent magnetic properties such as magnetic flux density BB after the additional heat treatment of greater than 1.65 T and iron loss $W_{10/400}$ of less than 12.5 W/kg could not be obtained. However, it was possible to obtain favorable magnetic properties such as magnetic flux density BB after the additional heat treatment of 1.64 or more and iron loss $W_{10/400}$ of 14.5 W/kg or less. In addition, the roundness before the additional heat treatment was excellent.

The embodiment of the present invention has been described above. However, the above-described embodiment is merely an example for implementing the present invention.

[Industrial Applicability]

According to the present invention, a non-oriented electrical steel sheet and a motor core which have high strength before additional heat treatment, excellent magnetic properties after additional heat treatment, excellent fatigue properties and roundness after punching, and excellent roundness as a stator core after additional heat treatment, and a method for manufacturing a non-oriented electrical steel sheet and a method for manufacturing a motor core can be obtained. The non-oriented electrical steel sheet of the present invention can be widely applied to applications requiring high strength and excellent magnetic properties. In particular, it is suitable for component applications subject to high stress, with typical examples being rotors of high-speed rotating machines, for example, motors for machine tools and turbine generators and traction motors for electric and hybrid vehicles. In addition, it is suitable for applications in which a rotor and a stator of a high-speed rotating motor are manufactured from the same steel sheet.

**Claims**

1. A non-oriented electrical steel sheet having a chemical composition in mass% of:

  C: 0.0100% or less,
  Si: 2.6% to 4.1%,
  Mn: 0.1% to 3.0%,
  P: 0.15% or less,
  S: 0.0013% or less,
  N: 0.0050% or less,
  Al: 0.1% to 2.0%,
  Mg: 0.0002% to 0.0100%,
  B: 0.0001% to 0.0010%,
  one or more selected from Sn and Sb: 0% to 0.100%,
  Cr: 0% to 0.1%,
  Ni: 0% to 5.0%,
  Cu: 0% to 5.0%,
  Ca: 0% to 0.010%, and
  rare earth elements (REM): 0% to 0.010%, with the balance of Fe and impurities,
  wherein an area fraction of a crystal structure A composed of crystal grains having a grain size of 100 $\mu$m or more is 1% to 30% in a cross section parallel to a rolled plane of the non-oriented electrical steel sheet,
  wherein an average grain size of a crystal structure B which is a crystal structure other than the crystal structure A is 40 $\mu$m or less, and
  wherein a Vickers hardness HvA of the crystal structure A and a Vickers hardness HvB of the crystal structure B satisfy Equation 1 below;
  wherein the area fraction, the average grain size and the Vickers hardness are measured as described in the description.

$$(HvA^2+HvB^2)/2-(HvA+HvB)^2/4 \leq 7.0 \ldots \text{Equation 1}$$

2. The non-oriented electrical steel sheet according to claim 1,

  wherein the chemical composition includes one or more selected from the group of
  one or more selected from Sn and Sb: 0.005% to 0.100%,
  Cr: 0.01% to 0.1%,
  Ni: 0.05% to 5.0%,
  Cu: 0.05% to 5.0%,

Ca: 0.0010% to 0.0100%, and
rare earth elements (REM): 0.0020% to 0.0100%.

3. The non-oriented electrical steel sheet according to claim 1 or 2,
wherein a tensile strength in a rolling direction is 520 MPa or more.

4. The non-oriented electrical steel sheet according to any one of claims 1 to 3,
wherein a sheet thickness deviation per sheet width of about 400 mm is 1 $\mu$m or more and 20 $\mu$m or less; wherein the sheet thickness deviation is measured as described in the description.

5. A motor core obtained by stacking the non-oriented electrical steel sheets according to any one of claims 1 to 4.

6. The motor core according to claim 5, wherein the crystal structure has an average grain size of 60 $\mu$m or more and 200 $\mu$m or less, measured as described in the description.

7. A method for manufacturing a non-oriented electrical steel sheet according to any one of claims 1 to 4, the method comprising:

heating a slab having the chemical composition according to claim 1 at 1000°C to 1200°C and carrying out hot rolling to manufacture a hot-rolled steel sheet;
subjecting the hot-rolled steel sheet to hot-band annealing at a maximum reaching temperature of 900°C to 1150°C;
subjecting the hot-rolled steel sheet after the hot-band annealing to cold rolling or warm rolling at a rolling reduction of 83% or higher to manufacture an intermediate steel sheet; and
subjecting the intermediate steel sheet to final annealing that satisfies Equation 2 below with respect to a temperature increase rate S1 (°C/second) in a temperature increase process from 500°C to 600°C with a maximum reaching temperature of 700°C to 850°C.

$$300 \leq S1 \leq 1000 \ldots \text{Equation 2}$$

8. A method for manufacturing a motor core, comprising:

manufacturing a non-oriented electrical steel sheet according to claim 7;
punching the non-oriented electrical steel sheet into a core shape; and
stacking non-oriented electrical steel sheets after punching.

9. The method for manufacturing a motor core according to claim 8, further comprising:
subjecting the stacked non-oriented electrical steel sheets to additional heat treatment at a temperature of 750°C or more and 900°C or less in an atmosphere containing 70 volume% or more of nitrogen.

**Patentansprüche**

1. Nichtorientiertes Elektrostahlblech mit einer chemischen Zusammensetzung in Masse-% von:

C: 0,0100% oder weniger,
Si: 2,6% bis 4,1%,
Mn: 0,1% bis 3,0%,
P: 0,15% oder weniger,
S: 0,0013% oder weniger,
N: 0,0050% oder weniger,
Al: 0,1% bis 2,0%,
Mg: 0,0002% bis 0,0100%,
B: 0,0001% bis 0,0010%,
ein oder mehrere Elemente, ausgewählt aus Sn und Sb: 0% bis 0,100%,
Cr: 0% bis 0,1%,
Ni: 0% bis 5,0%,

Cu: 0% bis 5,0%,
Ca: 0% bis 0,010%, und
Seltene Erden (REM): 0% bis 0,010%, mit dem Rest von Fe und Verunreinigungen,
wobei ein Flächenanteil einer Kristallstruktur A, die aus Kristallkörnern mit einer Korngröße von 100 $\mu$m oder mehr zusammengesetzt ist, 1% bis 30% in einem Querschnitt parallel zu einer Walzebene des nicht orientierten Elektrostahlblechs beträgt,
wobei eine durchschnittliche Korngröße einer Kristallstruktur B, die eine andere Kristallstruktur als die Kristallstruktur A ist, 40 $\mu$m oder weniger beträgt, und
wobei eine Vickershärte HvA der Kristallstruktur A und eine Vickershärte HvB der Kristallstruktur B die nachstehende Gleichung 1 erfüllen;
wobei der Flächenanteil, die mittlere Korngröße und die Vickershärte wie in der Beschreibung beschrieben gemessen werden.

$$(HvA^2+HvB^2)/2-(HvA+HvB)^2/4 \leq 7,0 \ ... \ \text{Gleichung 1}$$

2. Nichtorientiertes Elektrostahlblech nach Anspruch 1,

wobei die chemische Zusammensetzung ein oder mehrere aufweist, ausgewählt aus der Gruppe von
ein oder mehrere, ausgewählt aus Sn und Sb: 0,005% bis 0,100%,
Cr: 0,01% bis 0,1%,
Ni: 0,05% bis 5,0%,
Cu: 0,05% bis 5,0%,
Ca: 0,0010% bis 0,0100%, und
Seltene Erden (REM): 0,0020% bis 0,0100%.

3. Nichtorientiertes Elektrostahlblech nach Anspruch 1 oder 2,
wobei die Zugfestigkeit in einer Walzrichtung 520 MPa oder mehr beträgt.

4. Nichtorientiertes Elektrostahlblech nach einem der Ansprüche 1 bis 3,
wobei eine Blechdickenabweichung pro Blechbreite von etwa 400 mm 1 $\mu$m oder mehr und 20 $\mu$m oder weniger beträgt; wobei die Blechdickenabweichung wie in der Beschreibung beschrieben gemessen wird.

5. Motorkern, der durch Stapeln der nichtorientierten Elektrostahlbleche nach einem der Ansprüche 1 bis 4 erhalten wird.

6. Motorkern nach Anspruch 5,
wobei die Kristallstruktur eine durchschnittliche Korngröße von 60 $\mu$m oder mehr und 200 $\mu$m oder weniger aufweist, gemessen wie in der Beschreibung beschrieben.

7. Verfahren zum Herstellen eines nichtorientierten Elektrostahlblechs nach einem der Ansprüche 1 bis 4, wobei das Verfahren umfasst:

Erwärmen einer Bramme, die eine chemische Zusammensetzung gemäß Anspruch 1 aufweist, auf 1000°C bis 1200°C und Durchführen eines Warmwalzens zum Herstellen eines warmgewalzten Stahlblechs;
Unterziehen des warmgewalzten Stahlblechs einem Warmbandglühen bei einer maximal erreichenden Temperatur von 900°C bis 1150°C;
Unterziehen des warmgewalzten Stahlblechs nach dem Warmbandglühen einem Kaltwalzen oder einem Warmwalzen mit einer Walzreduktion von 83% oder höher zur Herstellung eines Zwischenstahlblechs; und
Unterziehen des Zwischenblechs einem Endglühen, das die nachstehende Gleichung 2 in Bezug auf eine Temperaturerhöhungsrate S1 (°C/Sekunde) in einem Temperaturerhöhungsprozess von 500°C auf 600°C mit einer maximal erreichenden Temperatur von 700°C bis 850°C erfüllt.

$$300 \leq S1 \leq 1000 \ ... \ \text{Gleichung 2}$$

8. Verfahren zum Herstellen eines Motorkerns, umfassend:

Herstellen eines nichtorientierten Elektroblechs nach Anspruch 7;
Stanzen des nichtorientierten Elektroblechs in eine Kernform; und Stapeln der nichtorientierten Elektrobleche nach dem Stanzen.

**9.** Verfahren zum Herstellen eines Motorkerns nach Anspruch 8, ferner umfassend:
Unterziehen der gestapelten nichtorientierten Elektrostahlbleche einer zusätzlichen Wärmebehandlung bei einer Temperatur von 750°C oder mehr und 900°C oder weniger in einer Atmosphäre, die 70 Volumen-% oder mehr Stickstoff enthält.

**Revendications**

**1.** Tôle en acier magnétique non orientée ayant la composition chimique suivante, en % en masse :

C : 0,0100 % ou moins,
Si : 2,6 % à 4,1 %,
Mn : 0,1 % à 3,0 %,
P : 0,15 % ou moins,
S : 0,0013 % ou moins,
N : 0,0050 % ou moins,
Al : 0,1 % à 2,0 %,
Mg : 0,0002 % à 0,0100 %,
B : 0,0001 % à 0,0010 %,
un ou plusieurs choisis parmi Sn et Sb : 0 % à 0,100 %,
Cr : 0 % à 0,1 %,
Ni : 0 % à 5,0 %,
Cu : 0 % à 5,0 %,
Ca : 0 % à 0,010 %, et
éléments des terres rares (REM) : 0 % à 0,010 %, le reste étant du Fe et des impuretés,
dans laquelle la fraction surfacique d'une structure cristalline A composée de grains cristallins ayant une grosseur de grain de 100 $\mu$m ou plus est de 1 % à 30 % dans une section transversale parallèle à un plan laminé de la tôle d'acier magnétique non orientée,
dans laquelle la grosseur de grain moyenne d'une structure cristalline B qui est une structure cristalline autre que la structure cristalline A est de 40 $\mu$m ou moins, et
dans laquelle la dureté Vickers HvA de la structure cristalline A et la dureté Vickers HvB de la structure cristalline B satisfont à l'équation 1 ci-dessous ;
dans laquelle la fraction surfacique, la grosseur de grain moyenne et la dureté Vickers sont mesurées comme décrit dans la description.

$$(HvA^2 + HvB^2) / 2 - (HvA + HvB)^2 / 4 \leq 7,0 \ldots \text{Equation 1}$$

**2.** Tôle d'acier magnétique non orientée selon la revendication 1, dans laquelle la composition chimique contient un ou plusieurs choisis dans le groupe suivant :

un ou plusieurs choisis parmi Sn et B : 0,005 % à 0,100 %,
Cr : 0,01 % à 0,1 %,
Ni : 0,05 % à 5,0 %,
Cu : 0,05 % à 5,0 %,
Ca : 0,0010 % à 0,0100 %, et
éléments des terres rares (REM) : 0,0020 % à 0,0100 %.

**3.** Tôle d'acier magnétique non orientée selon la revendication 1 ou 2, dans laquelle la résistance à la traction dans une direction de laminage est de 520 MPa ou plus.

**4.** Tôle d'acier magnétique non orientée selon l'une quelconque des revendications 1 à 3, dans laquelle l'écart d'épaisseur de tôle pour une largeur de tôle d'environ 400 mm est de 1 $\mu$m ou plus et 20 $\mu$m ou moins ; dans laquelle l'écart d'épaisseur de tôle est mesuré comme décrit dans la description.

5. Noyau de moteur obtenu par empilement de tôles d'acier magnétiques non orientées selon l'une quelconque des revendications 1 à 4.

6. Noyau de moteur selon la revendication 5, dans lequel la structure cristalline a une grosseur de grain moyenne de 60 $\mu$m ou plus et 200 $\mu$m ou moins, mesurée comme décrit dans la description.

7. Procédé de fabrication d'une tôle d'acier magnétique non orientée selon l'une quelconque des revendications 1 à 4, le procédé comprenant :

le chauffage d'une brame ayant la composition chimique selon la revendication 1 à une température de 1000°C à 1200°C et la mise en œuvre d'un laminage à chaud pour fabriquer une tôle d'acier laminée à chaud ;
la soumission de la tôle d'acier laminée à chaud à un recuit de bande chaude à une température atteinte maximale de 900°C à 1150°C ;
la soumission de la tôle d'acier laminée à chaud après le recuit de bande chaude à un laminage à froid ou un laminage à tiède à une réduction de laminage de 83 % ou plus pour fabriquer une tôle d'acier intermédiaire ; et
la soumission de la tôle d'acier intermédiaire à un recuit final qui satisfait à l'équation 2 ci-dessous en regard de la vitesse d'augmentation de température S1 (°C/seconde) dans un traitement d'augmentation de température de 500°C à 600°C avec une température atteinte maximale de 700°C à 850°C.

$$300 \leq S1 \leq 1000 \text{ ... Equation 2}$$

8. Procédé pour fabriquer un noyau de moteur, comprenant :

la fabrication d'une tôle d'acier magnétique non orientée selon la revendication 7 ;
l'estampage de la tôle d'acier magnétique non orientée sous la forme d'un noyau ; et
l'empilement de tôles d'acier magnétiques non orientées après estampage.

9. Procédé pour fabriquer un noyau de moteur selon la revendication 8, comprenant en outre :
la soumission des tôles d'acier magnétiques non orientées à un traitement à la chaleur additionnel à une température de 750°C ou plus et 900°C ou moins dans une atmosphère contenant 70 % en volume ou plus d'azote.

**EP 4 273 279 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021061565 A
- JP 2021061707 A
- JP 2021094802 A
- JP 60238421 A
- JP 62256917 A
- JP H1162748 A
- JP H28346 A
- JP H6330255 A
- JP 2005113185 A
- JP 2006070296 A
- WO 2018164185 A
- JP 2018021242 A
- WO 2018025941 A